# EUROPEAN PATENT APPLICATION

(11) **EP 4 598 002 A1**
(43) Date of publication of application: **06.08.2025**
(21) Application number: 23871526.2
(22) Date of filing: 14.08.2023
(51) Int. Cl.: H04N 5/64

(54) **HEAD-MOUNTED DISPLAY**

(30) Priority: 26.09.2022 JP 2022152321
(71) Applicant: Sony Group Corporation, Tokyo 108-0075 (JP)
(72) Inventor: YOSHIDA, Takaaki, Tokyo 108-0075 (JP)
(74) Representative: D Young & Co LLP
(86) International application number: PCT/JP2023/029400
(87) International publication number: WO 2024/070284

(57) **Abstract**

A head-mounted display according to an embodiment of the present technology includes a first member, a second member, and a fixing member. The first member includes a first pad which comes into contact with a first part of a face of a user. The second member includes a second pad which comes into contact with a second part of the face of the user different from the first part. The fixing member is capable of fixing the second member to the first member and is configured such that the fixing of the second member to the first member is released when a predetermined operation is made by the user.

## Description

### Technical Field

The present technology relates to a head-mounted display that is worn on a head of a user to be used.

### Background Art

Patent Literature 1 discloses a head-mounted display that can be flipped up. When a display is flipped up in this head-mounted display, display of an image with respect to the display is controlled so as to enable a user to experience AR (AR: Augmented Reality). On the other hand, when the display is flipped down, the display of an image with respect to the display is controlled so as to enable the user to experience VR (VR: Virtual Reality). Thus, the user can smoothly make a switch between the AR experience and the VR experience without removing the head-mounted display.

### Citation List

### Patent Literature

Patent Literature 1: Japanese Patent No. 6216000

### Disclosure of Invention

### Technical Problem

In this manner, a technology that enables convenience of a user who uses a head-mounted display to be improved is being demanded.

In view of the circumstances as described above, the present technology aims at providing a head-mounted display that enables convenience of a user to be improved.

### Solution to Problem

To attain the object described above, a head-mounted display according to an embodiment of the present technology includes a first member, a second member, and a fixing member.

The first member includes a first pad which comes into contact with a first part of a face of a user.

The second member includes a second pad which comes into contact with a second part of the face of the user different from the first part.

The fixing member is capable of fixing the second member to the first member and is configured such that the fixing of the second member to the first member is released when a predetermined operation is made by the user.

In the head-mounted display, the second member is fixed to the first member by the fixing member. Further, when the predetermined operation is made by the user, the fixing of the second member to the first member is released. Thus, the convenience of the user can be improved.

The fixing member may include a claw member which is connected to the second member, is latched to the first member, and is configured such that the latch to the first member is released when the predetermined operation is made.

The second member may include a fixing-side member which is fixed to the first member by the fixing member and a movement-side member which is movably connected to the fixing-side member. In this case, the predetermined operation may include an operation of moving the movement-side member with respect to the fixing-side member.

The movement-side member may be movably connected to the fixing-side member via a spring.

The fixing member may include a claw member which is movably connected to the fixing-side member, is latched to the first member, and is configured such that the latch to the first member is released when the predetermined operation is made. In this case, the movement-side member may include a pressing member which presses the claw member such that the latch of the claw member with respect to the first member is released in accordance with the operation of moving the movement-side member with respect to the fixing-side member.

The claw member may be rotatably connected to the fixing-side member. In this case, the pressing member may press the claw member such that the claw member rotates in a direction in which the latch of the claw member with respect to the first member is released in accordance with the operation of moving the movement-side member with respect to the fixing-side member.

The first member may be attached to a forehead of the user which is the first part via the first pad. In this case, the second member may be attached to a cheek of the user which is the second part via the second pad.

The head-mounted display may further include a link mechanism which rotatably connects the second member to the first member. In this case, the link mechanism may mutually connect the first member and the second member such that a rotation operation can be made, the rotation operation being an operation in which the second member whose fixing to the first member has been released rotates in a flip-up direction in which a rotation angle of the second member increases from a basic usage state of the head-mounted display.

The link mechanism may be configured in an area of each of the first member and the second member on a side of the face of the user in the basic usage state.

The link mechanism may include a spring which biases the second member in accordance with the rotation operation.

The spring included in the link mechanism may bias, when the rotation angle of the second member is smaller than a predetermined angle, the second member to rotate in a flip-down direction in which the rotation angle of the second member becomes smaller, and bias, when the rotation angle of the second member becomes larger than the predetermined angle, the second member to rotate in the flip-up direction.

A maximum value of a load of the spring in midst of the rotation operation may be 4.8 N or more and 7.2 N or less.

The spring may bias the second member with respect to the first member in a flip-down state where the second member is fixed to the first member. In this case, a maximum value of a load of the spring in the flip-down state may be 1.6 N or more and 2.4 N or less.

The link mechanism may include a hinge mechanism.

The head-mounted display may further include one shaft member which rotatably connects the second member to the first member. In this case, the one shaft member may mutually connect the first member and the second member such that a rotation operation can be made, the rotation operation being an operation in which the second member whose fixing to the first member has been released rotates in a flip-up direction in which a rotation angle of the second member increases from a basic usage state of the head-mounted display.

The head-mounted display may further include a planar upper surface which is positioned on an upper side in a basic usage state of the head-mounted display. In this case, the first pad may be configured so as not to protrude from the upper surface.

The head-mounted display may further include an operation element for releasing the fixing of the second member to the first member. In this case, the predetermined operation may include an operation of the operation element.

The first member may include an attachment portion for attaching a belt to be worn on a head of the user.

The head-mounted display may further include a display unit which displays an image. In this case, the second member may retain the display unit.

A head-mounted display according to an embodiment of the present technology includes a first member, a second member, and a fixing structure.

The first member includes a first pad which comes into contact with a first part of a face of a user.

The second member includes a light-shielding member which comes into contact with a second part of the face of the user different from the first part such that a load is not received from the second part.

The fixing structure removably fixes the second member to the first member.

### Brief Description of Drawings

[Figs. 1] Schematic diagrams showing a configuration example of a head-mounted display according to an embodiment of the present technology.
[Fig. 2] A schematic diagram showing a configuration example of a fixing-side front block.
[Fig. 3] A schematic diagram showing a configuration example of a movable-side front block and a link mechanism block.
[Fig. 4] A schematic diagram showing a configuration example of a lower pad block and a lower pad sheet metal.
[Figs. 5] Schematic diagrams showing a configuration example of the lower pad block.
[Fig. 6] A schematic diagram showing a configuration example of a lower housing, an optical block, and the lower pad sheet metal.
[Fig. 7] A schematic diagram showing a configuration example of the lower pad block, the lower pad sheet metal, and a slide spring.
[Fig. 8] A schematic diagram showing a configuration example of the link mechanism block.
[Fig. 9] A schematic diagram showing the configuration example of the link mechanism block.
[Fig. 10] A schematic diagram showing the configuration example of the link mechanism block.
[Fig. 11] A schematic diagram showing the configuration example of the link mechanism block.
[Figs. 12] Side views showing the head-mounted display in a flip-down state.
[Fig. 13] A side view showing the head-mounted display in a release state.
[Fig. 14] A side view showing the head-mounted display in midst of flip-up.
[Figs. 15] Side views showing the head-mounted display in a flip-up state.
[Figs. 16] Schematic diagrams showing a configuration example of the lower pad blocks and the lower pad sheet metal in the flip-down state and the release state.
[Figs. 17] Schematic diagrams each showing a head-mounted display according to a comparative example.
[Figs. 18] Schematic diagrams each showing a head-mounted display according to a comparative example.
[Figs. 19] Schematic diagrams each showing a setting position of an upper pad.
[Fig. 20] A schematic diagram showing a head-mounted display including a button.
[Figs. 21] Schematic diagrams each showing a configuration example of a light-shielding cover.
[Fig. 22] A table showing features in each structure of the head-mounted display.
[Figs. 23] Schematic diagrams showing a head-mounted display according to a comparative example. Modes for Carrying Out the Invention

Hereinafter, embodiments according to the present technology will be described with reference to the drawings.

### [Head-mounted display]

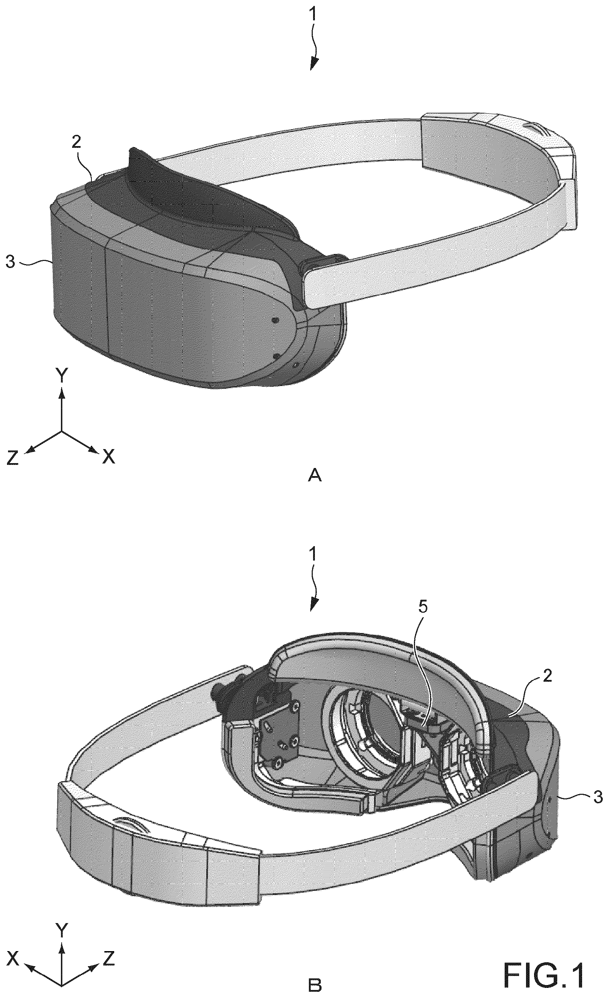

Figs. 1 are schematic diagrams showing a configuration example of a head-mounted display according to an embodiment of the present technology.

Fig. 1A shows a state where the head-mounted display 1 is seen from a front side. Fig. 1B shows a state where the head-mounted display 1 is seen from a back side.

Hereinafter, descriptions will be given while an X direction is set as a left-right direction (a positive side of an X axis is the right side, and a negative side thereof is the left side), a Y direction is set as an up-down direction (a positive side of a Y axis is the upper side, and a negative side thereof is the lower side), and a Z direction is set as a front-rear direction (a positive side of a Z axis is the front side, and a negative side thereof is the rear side). Of course, regarding the application of the present technology, a direction in which the head-mounted display 1 is used is not limited.

A head-mounted display (HMD: Head-mounted display) is a head-worn display apparatus. A user wears the head-mounted display on a head to view a display provided inside the head-mounted display. Thus, the user can view a video with high immersiveness. It is noted that the head-mounted display may also be referred to as a head mounted display in general.

In the present embodiment, the head-mounted display 1 includes a fixing-side front block 2, a movable-side front block 3, a display 4, and a link mechanism block 5. Of these, Figs. 1A and 1B show the fixing-side front block 2, the movable-side front block 3, and the link mechanism block 5.

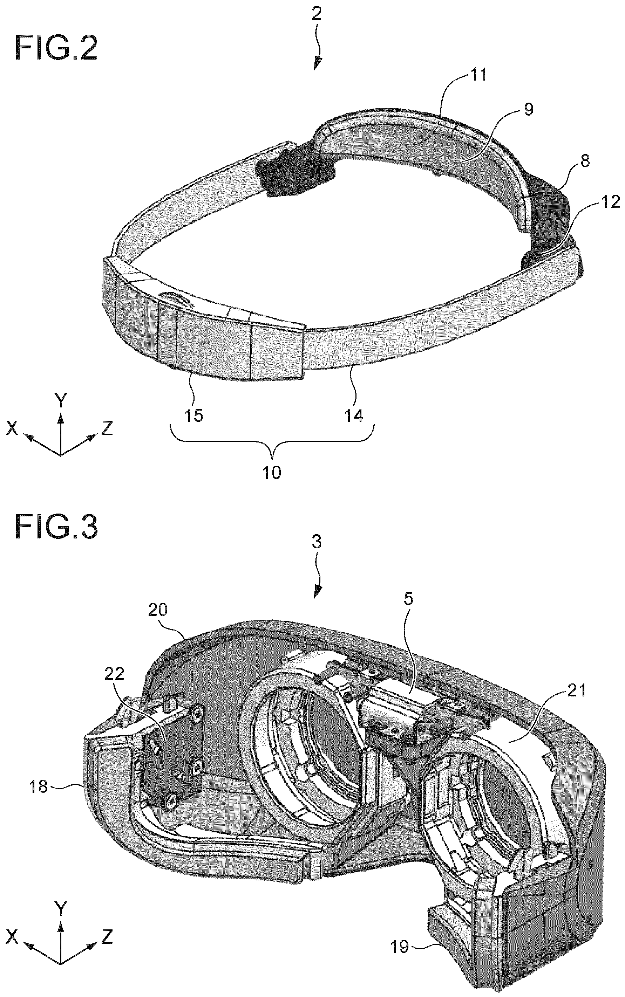

Fig. 2 is a schematic diagram showing a configuration example of the fixing-side front block 2.

Fig. 2 shows a state where the fixing-side front block 2 is seen from the back side. The fixing-side front block 2 is a member configuring an upper portion of the head-mounted display 1. The fixing-side front block 2 includes an upper housing 8, an upper pad 9, and an attachment block 10.

The upper housing 8 is a member which becomes a base for the fixing-side front block 2. The upper housing 8 has substantially an arc shape when seen from the upper side, and a center portion thereof is curved toward the positive side of the Z axis. A surface of the upper housing 8 on the rear side (the negative side of the Z axis) becomes an attachment surface 11 for attaching the upper pad 9. The attachment surface 11 has a semi-elliptical shape. Moreover, attachment portions 12 for attaching the attachment block 10 are respectively provided at left and right end portions of the upper housing 8. In addition, claw hook portions 13 are respectively formed at the left and right end portions of the upper housing 8 at positions that cannot be seen in Fig. 2. A detailed configuration of the claw hook portions 13 will be described later.

The upper housing 8 is formed of, for example, a material having rigidity such as plastic and metal. Of course, a specific shape and material of the upper housing 8 are not limited.

The upper pad 9 has a semi-elliptical plate shape that is substantially identical to the shape of the attachment surface 11. The upper pad 9 is attached to the attachment surface 11. In the present embodiment, the fixing-side front block 2 is attached to a forehead of the user via the upper pad 9. In other words, when the head-mounted display 1 is worn, the upper pad 9 comes into contact with the forehead of the user. The upper pad 9 is formed of, for example, a flexible material such as urethane foam, cloth, or cotton. Of course, a specific shape and material of the upper pad 9 are not limited.

The forehead of the user corresponds to an embodiment of a first part of a face of a user according to the present technology. The upper pad 9 corresponds to an embodiment of a first pad according to the present technology.

The attachment block 10 is a member that is attached to the sides of the head and the back of the head of the user. The attachment block 10 includes a belt 14 and a rear head pad 15. The belt 14 has a band shape, and both ends thereof are respectively attached to the attachment portions 12 of the upper housing 8. The belt 14 is worn on the head of the user. Specifically, when the head-mounted display 1 is worn, the belt 14 comes into contact with the sides of the head or passes an outer side of the sides of the head without coming into contact therewith.

A specific shape and material of the belt 14 are not limited. In addition, a specific attachment method of the belt 14 with respect to the attachment portions 12 is also not limited. For example, the belt 14 is attached to the attachment portions 12 by being fastened by screws. Furthermore, the length of the belt 14 may be adjustable according to the size of the head of the user.

The rear head pad 15 is a member which comes into contact with the back of the head of the user. A space for causing the belt 14 to pass through (loop) is formed in the rear head pad 15, and the rear head pad 15 is arranged at a center position of the belt 14. Similar to the upper pad 9, the rear head pad 15 is formed of a flexible material, for example. Of course, a specific shape and material of the rear head pad 15 are not limited.

Besides these, a specific configuration of the fixing-side front block 2 is not limited. The fixing-side front block 2 corresponds to an embodiment of a first member according to the present technology.

Fig. 3 is a schematic diagram showing a configuration example of the movable-side front block 3 and the link mechanism block 5.

Fig. 3 shows a state where the movable-side front block 3 and the link mechanism block 5 are seen from the back side. The movable-side front block 3 is a member configuring a lower portion of the head-mounted display 1. The movable-side front block 3 includes two lower pad blocks 18 and 19, a lower housing 20, an optical block 21, two lower pad sheet metals 22 and 23, and two slide springs 24 and 25. It is noted that the lower pad sheet metal 23 and the slide springs 24 and 25 are provided at positions that cannot be seen in Fig. 3.

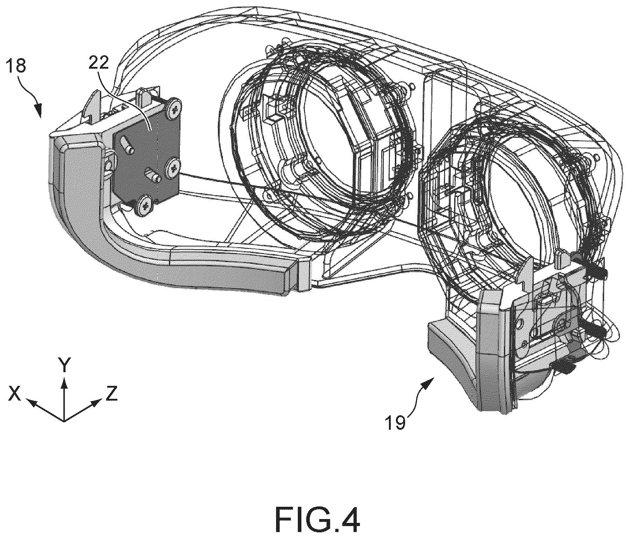

Fig. 4 is a schematic diagram showing a configuration example of the lower pad blocks 18 and 19 and the lower pad sheet metal 22.

Fig. 4 shows a state where the lower pad blocks 18 and 19 and the lower pad sheet metal 22 are seen from the back side. In Fig. 4, members other than the lower pad blocks 18 and 19 and the lower pad sheet metal 22 are illustrated with transparent lines.

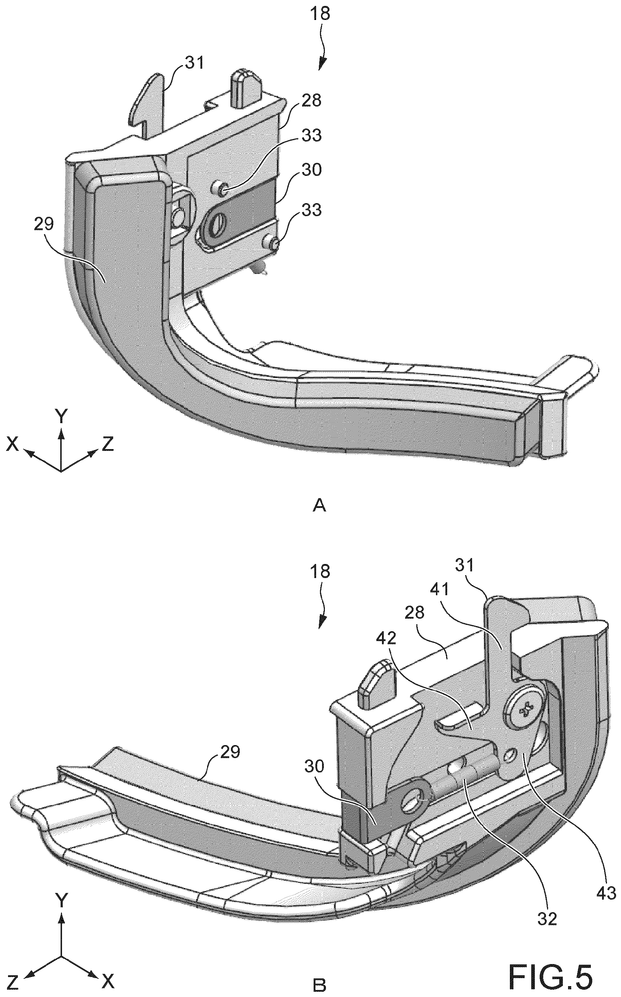

Figs. 5 are schematic diagrams showing a configuration example of the lower pad block 18.

Fig. 5A shows a state where the lower pad block 18 is seen from the back side. Fig. 5B shows a state where the lower pad block 18 is seen from the front side. The lower pad block 18 includes a lower pad base 28, a lower pad 29, a spring fixing sheet metal 30, a lock claw 31, and a lock spring 32.

The lower pad base 28 is a member which becomes a base for the lower pad block 18. The lower pad base 28 is formed as a member having a shape in which an L-shaped stick-like member with rounded corners is coupled to a rectangular plate-like member. The lower pad base 28 is arranged such that the plate-like portion thereof becomes parallel to the YZ plane. Further, two convex portions 33 are formed on an inner (the negative side of the X axis) surface of the plate-like portion of the lower pad base 28. The lower pad base 28 is formed of, for example, a material having rigidity such as plastic and metal. Of course, a specific shape and material of the lower pad base 28 are not limited.

The lower pad 29 has an L-shaped stick shape with rounded corners that is substantially identical to the stick-like portion of the lower pad base 28. The lower pad 29 is attached to the stick-like portion of the lower pad base 28. In the present embodiment, the movable-side front block 3 is attached to a left cheek of the user via the lower pad 29. In other words, when the head-mounted display 1 is worn, the lower pad 29 comes into contact with the left cheek of the user. The lower pad 29 is formed of, for example, a flexible material. A specific shape and material of the lower pad 29 are not limited.

The cheek of the user corresponds to an embodiment of a second part of the face of the user different from the first part according to the present technology. The lower pad 29 corresponds to an embodiment of a second pad according to the present technology.

The spring fixing sheet metal 30 has a shape in which a substantially rectangular flat plate is bent to be concave. Circular holes are respectively formed at end portions on both sides of the spring fixing sheet metal 30. The spring fixing sheet metal 30 is arranged such that the concave portion fits across two surfaces and a side portion of the plate-like portion of the lower pad base 28. In the present embodiment, the spring fixing sheet metal 30 is formed of metal. A specific shape and material of the spring fixing sheet metal 30 are not limited.

The lock claw 31 is a member having a claw shape. The lock claw 31 is rotatably connected to an outer (the positive side of the X axis) surface of the lower pad base 28 and includes three protrusion portions 41 to 43 about a rotation shaft. In the state shown in Fig. 3B, the protrusion portion 41 protrudes upwardly. Further, the protrusion portion 42 protrudes toward the positive side of the Z axis (the left side in Fig. 3B). Furthermore, the protrusion portion 43 protrudes downwardly.

A tip end of the protrusion portion 41 is bent toward the negative side of the Z axis (the right side in Fig. 3B), and the protrusion portion 41 has a claw shape as a whole. A reception surface for receiving a force of a claw pressing rib to be described later is formed at an upper side portion of the protrusion portion 42. A circular hole is formed at a lower end portion of the protrusion portion 43. In the present embodiment, the lock claw 31 is rotatably connected to the lower pad base 28 by a stepped screw.

A specific configuration of the lock claw 31 including a material, a shape, and the like is not limited. Further, a specific method for connecting the lock claw 31 to the lower pad base 28 is also not limited. The lock claw 31 corresponds to an embodiment of a claw member and a fixing member according to the present technology.

The lock spring 32 is a spring for connecting the spring fixing sheet metal 30 and the lock claw 31. One end portion of the lock spring 32 is hooked to the hole provided at the end portion of the spring fixing sheet metal 30. Moreover, the other end portion of the lock spring 32 is hooked to the hole provided at the lower end portion of the protrusion portion 43 in the lock claw 31. Thus, the spring fixing sheet metal 30 and the lock claw 31 are connected via the lock spring 32. A specific configuration of the lock spring 32 including a length, a material, and the like is not limited.

The lower pad block 19 has a configuration that is bilaterally symmetric with the lower pad block 18. When the head-mounted display 1 is worn, the lower pad 29 of the lower pad block 19 comes into contact with a right cheek of the user. In other words, the movable-side front block 3 is attached to the right cheek of the user via the lower pad 29 provided in the lower pad block 19.

Besides these, specific configurations of the lower pad blocks 18 and 19 are not limited. The lower pad blocks 18 and 19 each correspond to an embodiment of a fixing-side member according to the present technology.

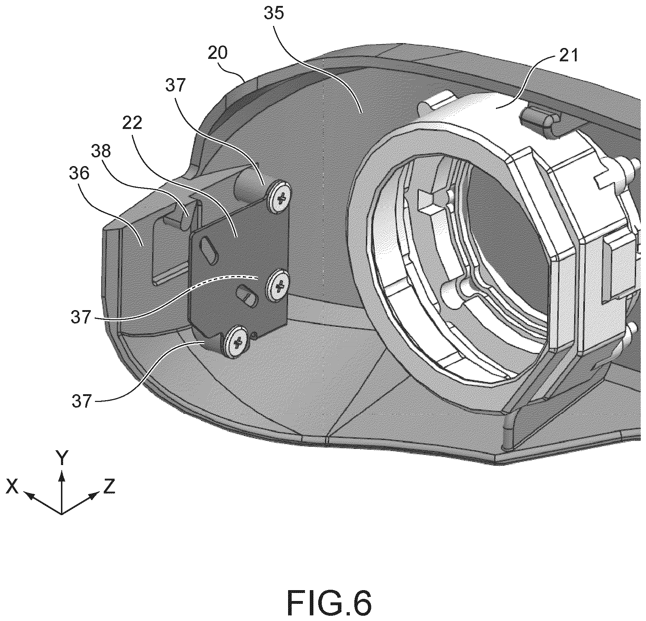

Fig. 6 is a schematic diagram showing a configuration example of the lower housing 20, the optical block 21, and the lower pad sheet metal 22.
Fig. 6 shows a state where the left half of the lower housing 20, the left half of the optical block 21, and the lower pad sheet metal 22 are seen from the back side.

The lower housing 20 is a member which becomes a base for the movable-side front block **3.** The lower housing 20 includes a front portion 35 and a side portion 36. The front portion 35 has a substantially elliptical plate shape. A substantially elliptical surface of the front portion 35 is roughly parallel to the XY plane. Further, an outer circumferential portion of the front portion 35 protrudes toward the negative side of the Z axis, and this portion becomes the side portion 36. Roughly an upper half of the side portion 36 protrudes relatively shortly toward the negative side of the Z axis, and roughly a lower half protrudes to be relatively long.

The left side of the side portion 36 roughly has a rectangular plate shape. The rectangular surface is substantially parallel to the YZ plane, and screw receivers 37 are formed on an inner (right side) surface thereof. The screw receivers 37 are cylindrical convex portions, and a total of three screw receivers are respectively formed at a corner portion on the positive side of the Z axis and the positive side of the Y axis, a lower side of an edge on the positive side of the Z axis, and a center of a lower edge in the Z direction on the inner surface. Each of the screw receivers 37 includes a screw hole.

In addition, a claw pressing rib 38 is formed on the inner surface. The claw pressing rib 38 is formed as a convex portion at a center of an upper edge of the inner surface in the Z direction. The claw pressing rib 38 corresponds to an embodiment of a pressing member according to the present technology.

Besides these, a specific shape and material of the lower housing 20 are not limited. For example, a substrate for controlling operations of various mechanisms provided in the head-mounted display 1 may be provided in the lower housing 20. The lower housing 20 corresponds to an embodiment of a movement-side member according to the present technology.

The optical block 21 is a member for attaching the display 4. In the present embodiment, the optical block 21 is constituted of two members each having a ring shape, and the two members are arranged next to each other on left and right sides on the inner (the negative side of the Z axis) surface of the front portion 35 of the lower housing 20. A specific shape and material of the optical block 21 are not limited.

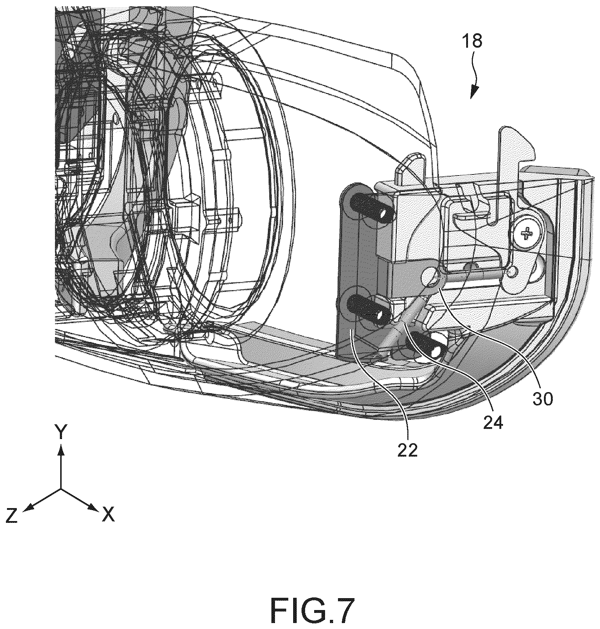

Fig. 7 is a schematic diagram showing a configuration example of the lower pad block 18, the lower pad sheet metal 22, and the slide spring 24.

Fig. 7 shows a state where the lower pad block 18, the lower pad sheet metal 22, and the slide spring 24 are seen from the front side. In Fig. 7, members other than the lower pad block 18, the lower pad sheet metal 22, and the slide spring 24 are illustrated with transparent lines.

The lower pad sheet metal 22 is an auxiliary member for slidably connecting the lower housing 20 to the lower pad block 18. The lower pad sheet metal 22 has a substantially rectangular plate shape, and the substantially rectangular surface thereof is arranged to be parallel to the YZ plane. Moreover, a total of three holes are respectively formed at a corner portion on the positive side of the Z axis and the positive side of the Y axis, a lower side of an edge on the positive side of the Z axis, and a center of a lower edge in the Z direction. The lower pad sheet metal 22 is arranged such that the holes respectively overlap with the screw receivers 37 of the lower housing 20. In other words, screws penetrate through the holes of the lower pad sheet metal 22 to fit with screw threads provided in the screw receivers, and thus the lower pad sheet metal 22 is connected to the lower housing 20. In Fig. 7, the three screws are schematically illustrated in black cylindrical shapes.

In addition, two holes each having a substantially elliptical shape are formed in the lower pad sheet metal 22. The two convex portions 33 formed on the inner (the negative side of the X axis) surface of the plate-like portion of the lower pad base 28 are fit into the two holes. In addition, a circular hole is formed at a lower portion of the lower pad sheet metal 22. The lower pad sheet metal 22 is formed of, for example, a material such as metal. Besides these, a specific configuration of the lower pad sheet metal 22 including a material, a shape, and the like is not limited.

The slide spring 24 is a spring for connecting the lower pad block 18 and the lower pad sheet metal 22. One end portion of the slide spring 24 is hooked to the hole provided at the end portion of the spring fixing sheet metal 30 provided in the lower pad block 18. Moreover, the other end portion of the slide spring 24 is hooked to the hole provided at the lower portion of the lower pad sheet metal 22. Thus, the lower pad block 18 and the lower pad sheet metal 22 are connected via the slide spring 24.

Since the lower pad sheet metal 22 is fastened to the lower housing 20 by the screws, it can also be said that the lower pad block 18 and the lower housing 20 are connected via the slide spring 24. A specific configuration of the slide spring 24 including a length, a material, and the like is not limited. The slide spring 24 corresponds to an embodiment of a spring according to the present technology which movably connects the movement-side member to the fixing-side member.

It is noted that the lower pad sheet metal 23 and the slide spring 25 are also similarly formed on the right side (near the lower pad block 19) of the head-mounted display 1. Besides these, a specific configuration of the entire movable-side front block 3 is not limited. The movable-side front block 3 corresponds to an embodiment of a second member according to the present technology.

The display 4 is, for example, a display device that uses liquid crystal, EL (ElectroLuminescence), and/or the like, and various images, various GUIs (Graphical User Interfaces), and the like are displayed thereon. In the present embodiment, the user views a video displayed on the display 4. An AR experience or a VR experience may become possible by the viewing of the display 4.

The display 4 is attached to the optical block 21 on the left and right sides. In other words, the display 4 is retained by the movable-side front block 3. When the user is wearing the head-mounted display 1, the optical block 21 and the display 4 are set at positions opposing both eyes of the user. The display 4 corresponds to an embodiment of a display unit according to the present technology which displays an image.

### [Link mechanism]

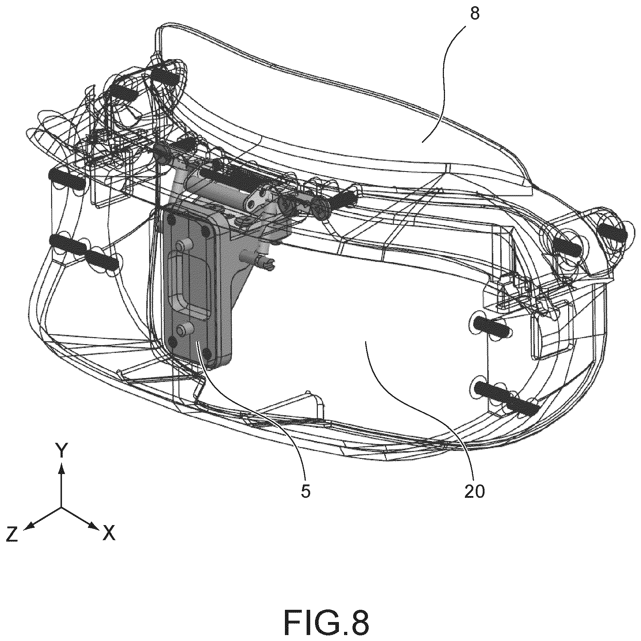

Figs. 8 to 11 are schematic diagrams each showing a configuration example of the link mechanism block 5.

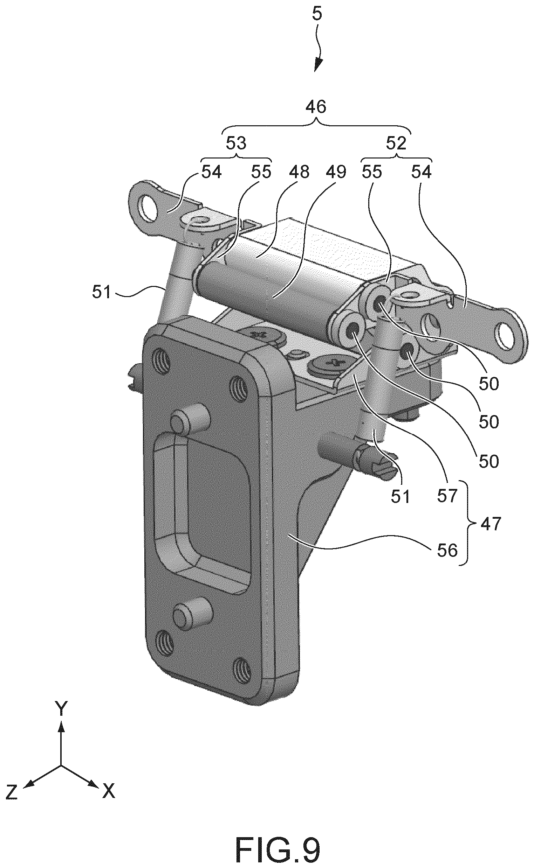

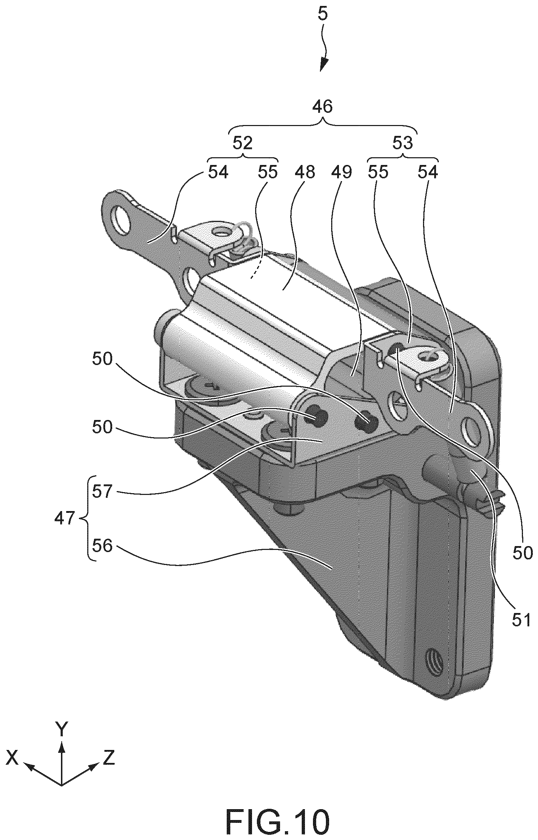

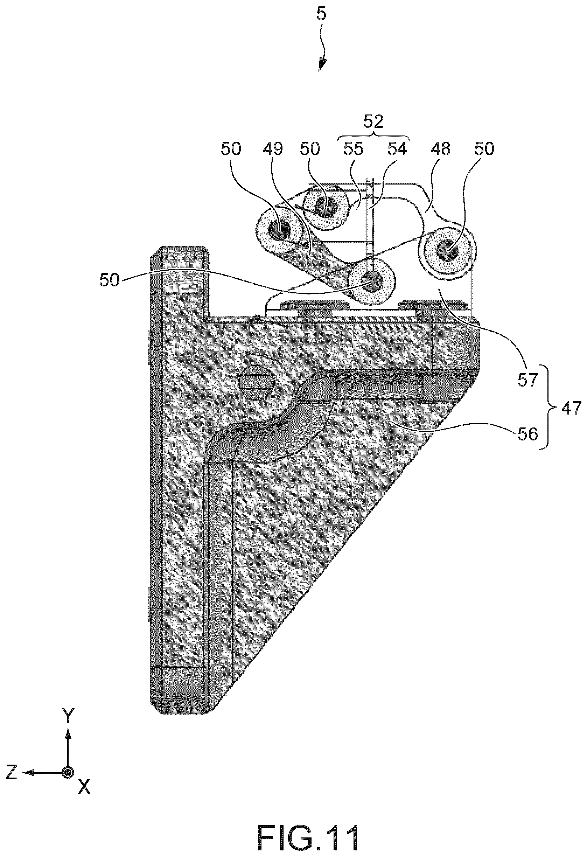

Fig. 8 shows a state where the link mechanism block 5 is seen from the front side. In Fig. 8, members other than the link mechanism block 5 are illustrated with transparent lines. Fig. 9 shows a state where the link mechanism block 5 is seen from the front side. Fig. 10 shows a state where the link mechanism block 5 is seen from the back side. Fig. 11 is a side view showing a case where the link mechanism block 5 is seen from the positive side of the X axis.

The link mechanism block 5 is a mechanism for rotatably connecting the fixing-side front block 2 and the movable-side front block 3. The link mechanism block 5 includes an upper link base 46, a lower link base 47, an upper link 48, a lower link 49, four shafts 50, and two link springs 51.

The upper link base 46 is a member which becomes a base for the link mechanism block 5. The upper link base 46 includes a right base 52 and a left base 53. The right base 52 roughly has a shape of an L-shaped plate. In other words, the right base 52 has a shape in which plate members 54 and 55 are connected vertically, and each of the plate members 54 and 55 roughly has a rectangular plate shape.

The plate member 54 is arranged to be parallel to the XY plane and includes two holes. Screws penetrate through the two holes, and the screws fit into the upper housing 8 as shown in Fig. 8. Thus, the upper link base 46 and the upper housing 8 are connected. Further, a protrusion portion that protrudes toward the positive side of the Z axis is formed in the plate member 54, and a hole for hooking the link spring 51 is formed in the protrusion portion. The plate member 55 is arranged to be parallel to the YZ plane and includes two holes (guide holes) for causing the shafts 50 to penetrate therethrough.

The left base 53 has a configuration that is bilaterally symmetric with the right base 52, and is arranged to be bilaterally symmetric with the right base 52.

The lower link base 47 is a member which becomes a base for the link mechanism block 5. The lower link base 47 includes an L-shaped member 56 and a plate member 57. The L-shaped member 56 has a shape in which a rectangular plate shape is bent in an L shape, and is arranged such that a bottom surface of the L shape becomes parallel to the XZ plane and a side surface becomes parallel to the XY plane.

Screw holes are respectively formed at four corner portions of the side surface of the L-shaped member 56 so that screws penetrate through the screw holes to fit into the screw holes provided in the lower housing 20. Thus, the lower link base 47 and the lower housing 20 are connected. It is noted that the lower link base 47 may also be connected to the optical block 21 and/or the like. Two convex portions protruding in the left-right direction for hooking the link springs 51 are formed at a side portion (a portion including the side surface). In addition, four screw holes are formed on a bottom surface.

The plate member 57 has a shape in which an isosceles trapezoid plate shape is bent vertically along lines that respectively pass through end portions of an upper base of the trapezoid (shorter one of the base portions out of the two base portions) and are vertical to the upper base and a lower base. In other words, the plate member 57 includes a rectangular bottom surface and two side surfaces each having a shape of a right triangle.

Four holes for causing screws to penetrate therethrough are formed on the bottom surface of the plate member 57. The plate member 57 is arranged such that the four holes formed on the bottom surface overlap with the four screw holes formed on the bottom surface of the L-shaped member 56. Then, by the fastening by the screws, the L-shaped member 56 and the plate member 57 are connected. Further, holes (guide holes) for causing the shafts 50 to penetrate through are formed two each on the two side surfaces of the plate member 57.

The upper link 48 is a link configuring the link mechanism. The upper link 48 has a columnar shape, and upper and lower surfaces each have a shape in which a center of a stick shape having both ends expanded in a circular shape is bent only by an amount corresponding to an acute angle such that an angle after the bending becomes a blunt angle. Through-holes for causing the shafts 50 to penetrate therethrough are formed at the circular portions of the upper and lower surfaces. In other words, two through-holes that communicate between the upper surface and the lower surface are formed in the upper link 48. The upper link 48 is arranged such that one of the through-holes overlaps with the holes formed in the plate members 55 of the right base 52 and the left base 53. Further, the upper link 48 is arranged such that the other one of the through-holes overlaps with the holes formed on the side surfaces of the plate member 57 of the lower link base 47.

The lower link 49 is a link configuring the link mechanism. The lower link 49 has a columnar shape, and upper and lower surfaces each roughly have a stick shape having both ends expanded in a circular shape. Through-holes for causing the shafts 50 to penetrate therethrough are formed at the circular portions of the upper and lower surfaces. Similar to the upper link 48, the lower link 49 is arranged such that one of the through-holes overlaps with the holes formed in the plate members 55 and the other one of the through-holes overlaps with the holes formed on the side surfaces of the plate member 57.

Each of the four shafts 50 is a stick-like member. In the present embodiment, the shaft 50 penetrates through the hole formed in the plate member 55 of the right base 52, the through-hole of the upper link 48, and the hole formed in the plate member 55 of the left base 53. Thus, the upper link 48 is rotatably connected to the upper link base 46. In addition, the shaft 50 penetrates through the hole formed on the side surfaces of the plate member 57 of the lower link base 47 and the through-hole of the upper link 48, and thus the upper link 48 is rotatably connected to the lower link base 47. Similarly, the lower link 49 is rotatably connected to the upper link base 46 and the lower link base 47.

In other words, as shown in Figs. 9 to 11, the upper link base 46 and the lower link base 47 are connected via the upper link 48 and the lower link 49. Further, the upper link 48 is arranged so as to hang over the lower link 49 on the upper side. The upper link base 46, the lower link base 47, the upper link 48, the lower link 49, and the shafts 50 are each formed of a material having rigidity such as metal, for example, but a specific configuration including a material, a shape, and the like is of course not limited.

Each of the two link springs 51 is a spring for connecting the upper link base 46 and the lower link base 47. One end portion of one of the link springs 51 is hooked to the hole formed in the protrusion portion of the plate member 54 of the right base 52. The other end portion is hooked to the right protrusion portion of the L-shaped member 56 of the lower link base 47. Similarly, the other one of the link springs 51 is hooked to the hole of the left base 53 and the left protrusion portion of the L-shaped member 56. Thus, the upper link base 46 and the lower link base 47 are connected via the two link springs 51.

Besides these, a specific configuration of the link mechanism block 5 is not limited. The link mechanism block 5 corresponds to an embodiment of a link mechanism according to the present technology. The link spring 51 corresponds to an embodiment of a spring included in the link mechanism according to the present technology.

### [Flip-up state and flip-down state]

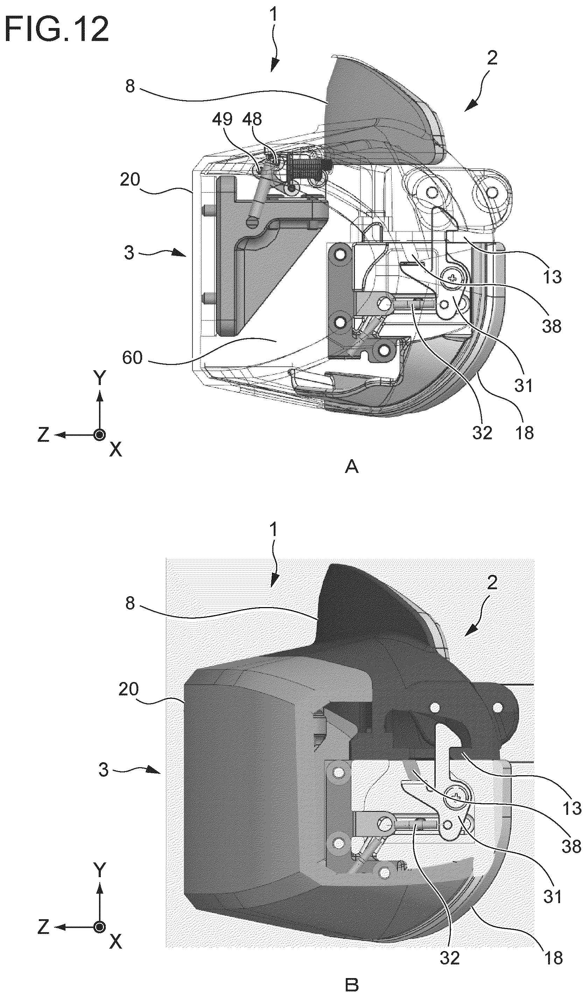

Figs. 12 are side views showing the head-mounted display 1 in a flip-down state.

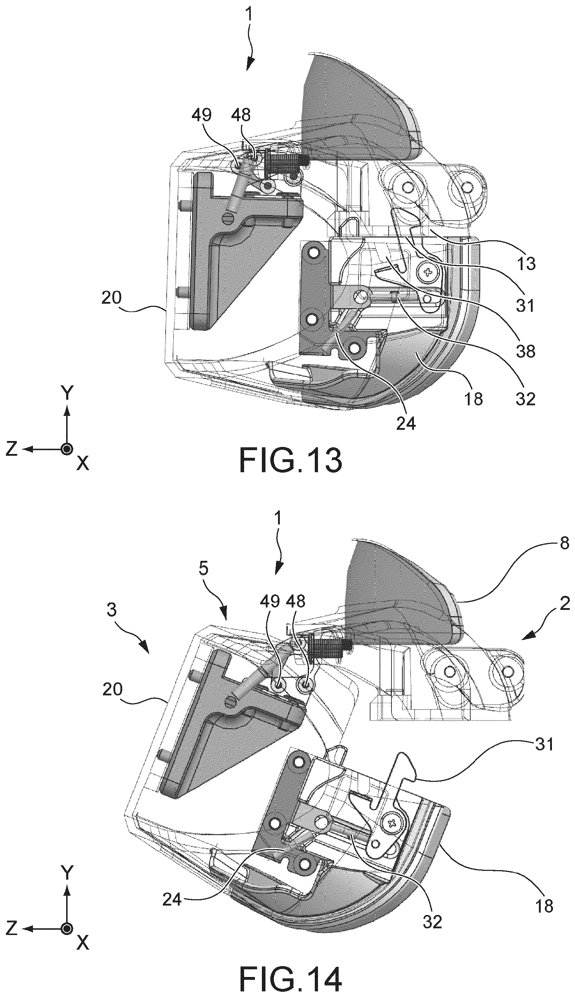

Fig. 13 is a side view showing the head-mounted display 1 in a release state.

Fig. 14 is a side view showing the head-mounted display 1 in midst of flip-up.

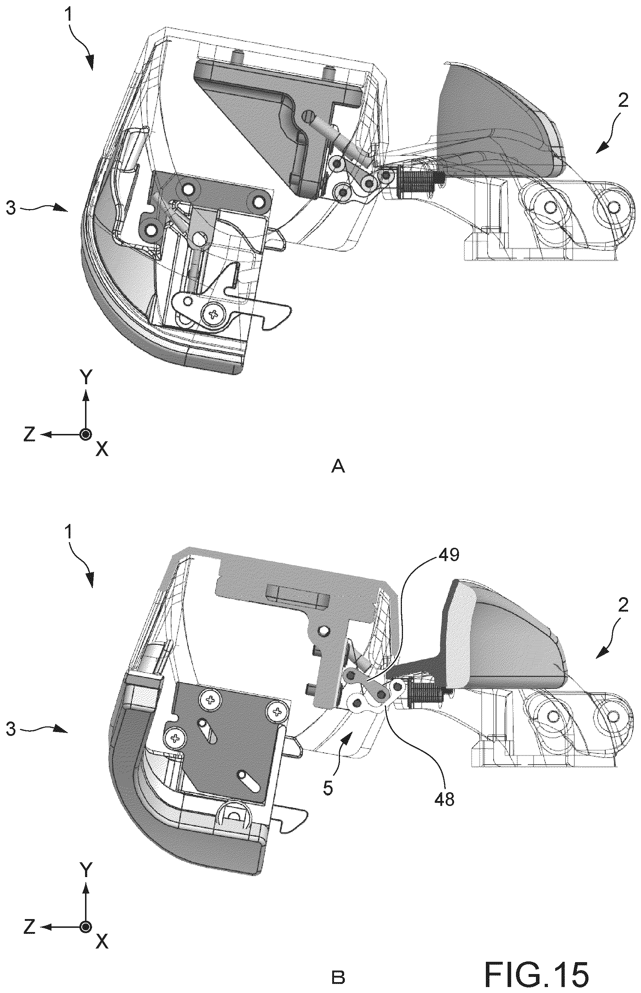

Figs. 15 are side views showing the head-mounted display 1 in a flip-up state.

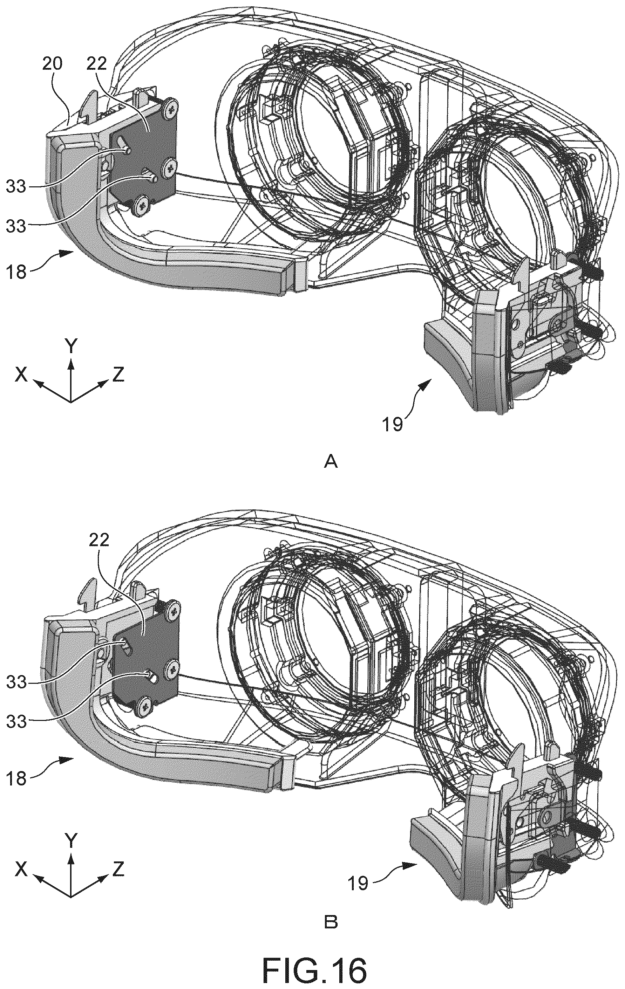

Figs. 16 are schematic diagrams showing a configuration example of the lower pad blocks 18 and 19 and the lower pad sheet metal 22 in the flip-down state and the release state.

Figs. 12 to 15 show side views of a state where the head-mounted display 1 is seen from the right side (the positive side of the X axis). It is noted that Figs. 12A, 13, 14, and 15A are illustrated such that mainly the internal members can be seen. Fig. 12B is illustrated such that mainly the external members such as the upper housing 8 and the lower housing 20 can be seen. Fig. 15B is illustrated such that mainly the upper link 48 and the lower link 49 can be seen.

In the present embodiment, the user performs a flip-up operation and a flip-down operation of the head-mounted display 1. Specifically, a state where the movable-side front block 3 is fixed to the fixing-side front block 2 and the entire head-mounted display 1 is roundly closed as shown in Figs. 12 is the flip-down state. In contrast, a state where the fixing with respect to the fixing-side front block 2 is released and the head-mounted display 1 is largely opened while the movable-side front block 3 is positioned farthest from the fixing-side front block 2 as shown in Figs. 15 is the flip-up state.

When the user wears the head-mounted display 1, the upper pad 9 is in contact with the forehead and the lower pads 29 are in contact with both cheeks in the flip-down state. Next, the length of the belt 14 is adjusted so that the rear head pad 15 comes into contact with the back of the head with an appropriate load. The head-mounted display 1 is worn in this manner.

The head-mounted display 1 can be removed in either the flip-up state or the flip-down state. In addition, the user can flip up the head-mounted display 1 and check the peripheral view (the view outside the head-mounted display 1) while wearing the head-mounted display 1. Alternatively, viewing of a video can be temporarily stopped so that the user can take a break while the head-mounted display 1 is flipped up.

### [Basic usage state]

A basic usage state of the head-mounted display 1 will be described. The basic usage state refers to a state of the head-mounted display 1 in a case where the user views a video. In the present embodiment, the viewing of a video is performed while the head-mounted display 1 is flipped down. Accordingly, the flip-down state corresponds to the basic usage state.

### [Flip-up operation]

A series of operations in the case of flipping up the head-mounted display 1 will be described. Hereinafter, regarding the members that perform similar operations like the lower pad blocks 18 and 19 and the like, descriptions on one of the members may be omitted.

When flip-up is started in the flip-down state (Figs. 12), the lower pad block 18 and the lower housing 20 are slightly separated from each other (Fig. 13). After that, the lower pad block 18 and the lower housing 20 come into close contact with each other again, and the fixing-side front block 2 and the movable-side front block 3 are separated from each other (Fig. 14). Then, the fixing-side front block 2 and the movable-side front block 3 are largely separated from each other to be set to the flip-up state (Figs. 15).

In the flip-down state shown in Figs. 12, the lock claw 31 is latched by the fixing-side front block 2. Specifically, the claw hook portion 13 for hooking the lock claw 31 is formed on the lower side of the upper housing 8, and an upper end of the lock claw 31 is hooked to the claw hook portion 13. Thus, the movable-side front block 3 (lower pad block 18) is fixed to the fixing-side front block 2. Further, the claw hook portion 13 also has a function of positioning the lock claw 31, and the lock claw 31 is positioned such that the upper end of the lock claw 31 extends in the up-down direction.

It is noted that although the movable-side front block 3 is fixed to the fixing-side front block 2 by the lock claws 31 in the present embodiment, the fixing may alternatively be realized by a fixing member having a shape other than the claw shape, for example. Further, a specific fixing method is also not limited.

Upon receiving a force of the lock spring 32, a lower end of the lock claw 31 is drawn toward the positive side of the Z axis (the left side in Figs. 12). Thus, since the upper end of the lock claw 31 tries to rotate toward the right side, the lock claw 31 is latched stably, and the latch is prevented from unintentionally coming off.

Although it depends on a fastening level of the attachment block 10 on the head, the upper pad 9 and the lower pad 29 receive a load of about 1 N to 10 N from the face of the user. Therefore, a latch amount of the lock claw 31 and the load of the lock spring 32 are set to appropriate values so that the latch of the lock claw 31 does not come off by the load. For example, the latch amount of the lock claw 31 is set to be about 2 mm. Further, the load of the lock spring 32 is set to be about 1 N. Of course, specific values of the latch amount of the lock claw 31 and the load of the lock spring 32 are not limited.

Furthermore, in the flip-down state, the claw pressing rib 38 provided in the lower housing 20 is in contact with the reception surface formed in the lock claw 31.

Fig. 16A shows the lower pad blocks 18 and 19 and the lower pad sheet metal 22 in the flip-down state. It is noted that Fig. 16A is the same figure as Fig. 4 but is shown again for comparison with Fig. 16B (release state).

As shown in Fig. 16A, the lower pad block 18 is sandwiched between the lower housing 20 and the lower pad sheet metal 22. Further, the two convex portions 33 formed in the lower pad block 18 fit into the two substantially-elliptical holes formed in the lower pad sheet metal 22. The two convex portions 33 are each positioned at a lower portion of the hole. Furthermore, the lower pad block 18 is abutted against the three screw receivers 37 (not shown) provided in the lower housing 20 to thus be positioned.

As shown in Fig. 13, in the release state, the positions of the fixing-side front block 2 and the lower pad block 18 are not changed from the flip-down state (Figs. 12), but the position of the lower housing 20 is changed. Specifically, the lower housing 20 is separated from the lower pad block 18 to move slightly toward the left side.

When a predetermined operation is made by the user, the state of the head-mounted display 1 shifts from the flip-down state to the release state. In the present embodiment, an operation of moving the lower housing 20 with respect to the lower pad block 18 is performed as the predetermined operation. Of course, a specific content of the predetermined operation is not limited.

Specifically, the user performs an operation of causing the lower housing 20 to slide counterclockwise about the link mechanism block 5. For example, the lower housing 20 moves downwardly (the negative side of the Y axis) near the lock claws 31. In addition, a portion of the lower housing 20 on the front side (the positive side of the Z axis) moves toward the front side, for example. The lower housing 20 is drawn into to come into close contact with the lower pad block 18 via the slide spring 24, but the user can separate the lower housing 20 and the slide spring 24 by causing the lower housing 20 to slide with a force above a certain level. In other words, the lower housing 20 is movably connected to the lower pad block 18 via the slide spring 24.

A load of the slide spring 24 is set to, for example, a value with which the lower housing 20 is sufficiently drawn and the lower housing 20 can be moved effortlessly by an operation of the user. Specifically, the value is set to, for example, 1 to 2 N (a total of 2 to 4 N for the slide springs 24 and 25). Of course, a specific value of the load of the slide spring 24 is not limited.

It is noted that the method of movably connecting the lower housing 20 to the lower pad block 18 is not limited to the method via the slide spring 24. For example, the movable connection may be realized by other methods such as a method of incorporating a connection member other than the slide spring 24.

When the user performs a slide operation, the lock claw 31 is pressed by the claw pressing rib 38 provided in the lower housing 20 such that the lock claw 31 rotates in a direction in which the latch of the lock claw 31 with respect to the upper housing 8 is released. Specifically, the claw pressing rib 38 moves downwardly so that the reception surface of the lock claw 31 is pressed downwardly by the claw pressing rib 38. The lock claw 31 rotates counterclockwise so that the hook with respect to the claw hook portion 13 is released.

Since the lower portion of the lock claw 31 is drawn by the lock spring 32, the lock claw 31 rotates when the pressing force by the claw pressing rib 38 exceeds the drawing force by the lock spring 32. The load of the lock spring 32 is set to a value with which the lock claw 31 can rotate effortlessly, for example.

It is noted that although the lock claw 31 is rotatably connected to the lower pad block 18 in the present embodiment, the lock claw 31 may be movably connected by a form other than the rotation. For example, the latch with respect to the upper housing 8 may be released by the lock claw 31 simply moving toward the left side.

Fig. 16B shows the lower pad blocks 18 and 19 and the lower pad sheet metal 22 in the release state. In the release state, each of the two convex portions 33 is positioned at an upper portion of the hole of the lower pad sheet metal 22 by the movement of the lower pad block 18. When the convex portions 33 are positioned at the upper ends of the holes in this manner, the lower pad block 18 and the lower housing 20 will be separated no more.

When the latch of the lock claws 31 is released in the release state, the fixing of the upper housing 8 and the lower pad block 18 is released to thus be set to a state in midst of flip-up as shown in Fig. 14. In this state, the lower portion of the lock claw 31 is drawn by the lock spring 32 so that the lock claw 31 rotates clockwise to return to its original state again. Moreover, the lower pad block 18 is drawn to the lower housing 20 by the slide spring 24, and thus the lower pad block 18 and the lower housing 20 return to the close contact state again.

In the present embodiment, the movable-side front block 3 is rotatably connected to the fixing-side front block 2 by the link mechanism block 5. Specifically, the link mechanism block 5 mutually connects the fixing-side front block 2 and the movable-side front block 3 such that a rotation operation can be made, the rotation operation being an operation in which the movable-side front block 3 whose fixing to the fixing-side front block 2 has been released rotates in a flip-up direction in which a rotation angle of the movable-side front block 3 increases from the basic usage state of the head-mounted display 1.

Specifically, in the state in midst of flip-up, the lower housing 20 and the lower pad block 18 provided in the movable-side front block 3 are connected to the fixing-side front block 2 in an integrated manner by the link mechanism block 5. Also in this state, the rotation operation of rotating the movable-side front block 3 in the flip-up direction is possible. In other words, while rotating clockwise using the link mechanism block 5 as a rotation shaft, the position of the movable-side front block 3 as a whole gradually changes toward the positive side of the Y axis.

Fig. 15A shows the head-mounted display 1 in a state where flip-up is completely finished. The state shown in Fig. 15A is a state where the movable-side front block 3 is rotated about 120 degrees with respect to the fixing-side front block 2, and the movable-side front block 3 can rotate no more in the clockwise direction.

When the user is to flip down the head-mounted display 1 again, operations in an order opposite to that of the operations described above are performed. It is noted that in the flip-down operation, the lower housing 20 will not be separated from the lower pad block 18, so the operation will not go through the release state (Fig. 13). In other words, the state of the head-mounted display 1 shifts from the flip-up state (Figs. 15) to the state in midst of flip-up (Fig. 14) and then returns to the flip-down state (Figs. 12). It is noted that during the shift from the state in midst of flip-up (Fig. 14) to the flip-down state (Figs. 12), an oblique surface at the upper end of the lock claw 31 slides along the claw hook portion 13, and the state smoothly shifts without the lock claw 31 being caught.

It is noted that in the present embodiment, when the lower housing 20 is rotated about 3 degrees from the flip-down state, the lock claw 31 rotates about 12 degrees, and the latch of the lock claw 31 is released. Of course, specific rotation angles of the lower housing 20 and the lock claw 31 are not limited. In addition, the operations during flip-up and the operations during flip-down that have been described above are mere examples, and specific contents of these operations are not limited.

### [Operations of link mechanism block]

Operations of the link mechanism block 5 during the rotation of the movable-side front block 3 will be described. In the flip-down state (Figs. 12) and the release state (Fig. 13), the directions of the upper link 48 and the lower link 49 are roughly the lateral direction (a direction parallel to the XZ directions), and the upper link 48 hangs over the lower link 49 from the upper side. After that, the upper link 48 and the lower link 49 gradually change directions, and the directions of the upper link 48 and the lower link 49 roughly become the vertical direction (a direction parallel to the XY directions) in the state in midst of flip-up (Fig. 14). In addition, the upper link 48 is positioned on the negative side of the Z axis (the right side in Fig. 14), and the lower link 49 is positioned on the positive side of the Z axis (the left side in Fig. 14).

In the state where the head-mounted display 1 is completely flipped up (Fig. 15B), the directions of the upper link 48 and the lower link 49 roughly become the lateral direction. At this time, the lower link 49 hangs over the upper link 48 from the upper side, and the end portion (the right end portion in Fig. 15B) of the lower link 49 is abutted against the upper surface of the upper link 48. Accordingly, the upper link 48 and the lower link 49 can move no more, and the movable-side front block 3 rotates no more.

This state becomes a maximum rotation angle of the movable-side front block 3. The maximum rotation angle of the movable-side front block 3 can be determined to be a desired angle by adjusting the shape and arrangement of the link mechanism block 5. Of course, the maximum rotation angle of the movable-side front block 3 is not limited and may be an arbitrary value.

Further, in the present embodiment, by the link springs 51, the movable-side front block 3 is biased in accordance with the rotation operation. The link springs 51 bias, when the rotation angle of the movable-side front block 3 is smaller than a predetermined angle, the movable-side front block 3 to rotate in a flip-down direction in which the rotation angle of the movable-side front block 3 becomes smaller, and bias, when the rotation angle of the movable-side front block 3 becomes larger than the predetermined angle, the movable-side front block 3 to rotate in the flip-up direction in which the rotation angle of the movable-side front block 3 becomes larger.

In the present embodiment, the link spring 51 having a wire diameter of 0.45 mm, a winding diameter of 4 mm, and a natural length of 15 mm, for example, is used in consideration of a space of the housing and a precipitousness level of the increase and decrease of the load. In this case, in the flip-down state (Figs. 12) and the release state (Fig. 13), a stretch of the link spring 51 from the natural length is about 2.3 mm. The link spring 51 gradually stretches along with the rotation of the movable-side front block 3, and the stretch of the link spring 51 becomes about 10 mm in the state shown in Fig. 14. The state shown in Fig. 14 is a state where the link spring 51 is stretched most in the series of rotation operations. In other words, a maximum value of the stretch of the link spring 51 becomes about 10 mm. After that, the link spring 51 gradually contracts, and the stretch of the link spring 51 becomes about 5 mm in the flip-up state (Figs. 15).

Further, in the flip-down state (Figs. 12) and the release state (Fig. 13), the spring load (tensile load) of the link spring 51 becomes about 2 N (about 4 N for the two link springs). In the state where the link spring 51 is stretched most (Fig. 14), the spring load becomes about 6 N (about 12 N for the two link springs). In the flip-up state (Figs. 15), the spring load (housing retention load) of the link spring 51 becomes about 3.5 N (about 7 N for the two link springs).

It is desirable to set the spring loads in the respective states to values approximately within ±20% of the values described above from viewpoints of the drawing operations, effortless operations, and sufficient retention. In this case, the maximum value of the load of the link spring 51 in midst of the rotation operation becomes 4.8 N or more and 7.2 N or less. Further, the maximum value of the load of the link spring 51 in the flip-down state becomes 1.6 N or more and 2.4 N or less. Furthermore, the maximum value of the load of the link spring 51 in the flip-up state becomes 2.8 N or more and 4.2 N or less. In these cases, the stretch amounts of the link spring 51 also become values approximately within ±20% of the values described above.

Herein, the rotation angle of the movable-side front block 3 in the state where the link spring 51 is stretched most (Fig. 14) corresponds to the predetermined angle. In other words, the state where the movable-side front block 3 is separated more from the fixing-side front block 2 than in Fig. 14 is the state where the rotation angle is larger than the predetermined angle. On the other hand, the state where the movable-side front block 3 is closer to the fixing-side front block 2 than in Fig. 14 is the state where the rotation angle is smaller than the predetermined angle.

The movable-side front block 3 operates in a direction in which the link spring 51 contracts. For example, when the rotation angle is larger than the predetermined angle and the rotation angle further increases (approaches the maximum rotation angle), the link spring 51 contracts more. Conversely, when the rotation angle becomes smaller (approaches the predetermined angle), the link spring 51 stretches more. Accordingly, when the rotation angle is larger than the predetermined angle, the movable-side front block 3 further operates in the direction in which the rotation angle increases. In other words, when the movable-side front block 3 is separated more from the fixing-side front block 2 than in Fig. 14, the movable-side front block 3 rotates in the flip-up direction so that the state of the head-mounted display 1 approaches the flip-up state (Figs. 15).

On the other hand, when the rotation angle is smaller than the predetermined angle and the rotation angle further decreases (the rotation angle approaches 0 degree), the link spring 51 contracts more. Conversely, when the rotation angle becomes larger (approaches the predetermined angle), the link spring 51 stretches more. Accordingly, when the movable-side front block 3 is closer to the fixing-side front block 2 than in Fig. 14, the movable-side front block 3 rotates in the flip-down direction so that the state of the head-mounted display 1 approaches the flip-down state (Figs. 12).

### [Position of link mechanism block]

In the present embodiment, the link mechanism block 5 is provided in the area of each of the fixing-side front block 2 and the movable-side front block 3 on the side of the face of the user in the basic usage state. As shown in Fig. 12A, in the basic usage state (flip-down state), an internal space 60 enclosed by the face of the user, the fixing-side front block 2, and the movable-side front block 3 is formed. The internal space 60 becomes the area on the side of the face of the user. Meanwhile, a space outside the head-mounted display 1 becomes an area not on the side of the face of the user. The link mechanism block 5 is arranged in the internal space 60.

So far, in the head-mounted display 1 according to the present embodiment, the movable-side front block 3 is fixed to the fixing-side front block 2 by the lock claws 31. Further, when a predetermined operation is made by the user, the fixing of the movable-side front block 3 to the fixing-side front block 2 is released. Thus, convenience of the user can be improved.

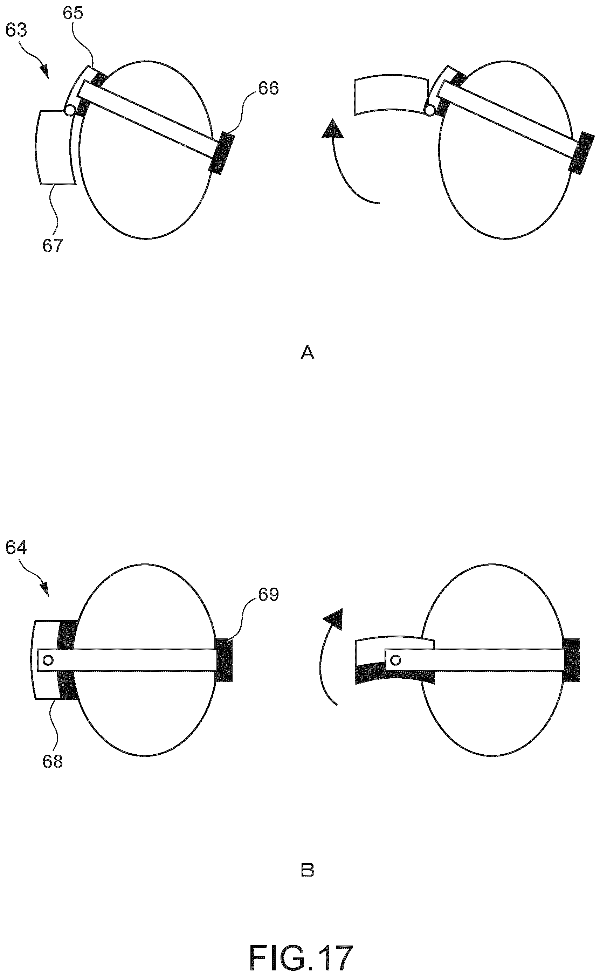

Figs. 17 are schematic diagrams each showing a head-mounted display according to a comparative example.
Fig. 17A shows a head-mounted display 63 including a ring-type attachment block as the comparative example. Fig. 17B shows a goggle-type head-mounted display 64 as the comparative example.

The head-mounted display 63 includes a pad 65 that comes into contact with the forehead and a pad 66 that comes into contact with the back of the head. A front block 67 including a display is connected at a lower portion of the pad 65, and the front block 67 can be flipped up (the right figure of Fig. 17A) or flipped down (the left figure of Fig. 17A).

The head-mounted display 64 is a goggle-type head-mounted display and includes a front block 68 including a display and a pad that comes into contact with a periphery of the eyes, and a pad 69 that comes into contact with the back of the head. In the front block 68, the pad that comes into contact with the periphery of the eyes is configured to enclose the display.

Since the front block 68 is constantly receiving a load from the head via the pad, if one tries to flip up the front block 68 (the right figure in Fig. 17B), the attachment state of the head-mounted display 64 on the head cannot be maintained. In other words, a problem that the front block 68 cannot be flipped up occurs.

However, the goggle-type head-mounted display 64 is smaller and lighter than the head-mounted display 63 including the ring-type attachment block, and the goggle type is advantageous in this point.

The head-mounted display 1 according to the present technology is a goggle-type head-mounted display 1 in which the movable-side front block 3 can be flipped up. Accordingly, the advantage that flip-up can be performed and the advantage of being a compact and light goggle-type head-mounted display are realized at the same time.

In the present technology, the fixing of the movable-side front block 3 to the fixing-side front block 2 is released by the operation of moving the lower housing 20 with respect to the lower pad block 18. Thus, the user can easily perform flip-up by a slide operation.

In the present technology, the latch of the lock claw 31 with respect to the fixing-side front block 2 is released by the operation of moving the lower housing 20 with respect to the lower pad block 18. Thus, the movable-side front block 3 can be stably fixed to the fixing-side front block 2.

In the present technology, the movable-side front block 3 is divided into the lower pad block 18 and the lower housing 20. Thus, it becomes possible to realize the head-mounted display 1 with which the slide operation can be made.

In the present technology, the lower housing 20 is movably connected to the lower pad block 18 via the slide spring 24. Thus, the lower housing 20 and the lower pad block 18 are connected stably. In addition, the lower housing 20 and the lower pad block 18 can be flipped up in an integrated manner.

In the present technology, the lock claw 31 is pressed by the claw pressing rib 38 such that the lock claw 31 rotates in the direction in which the latch of the lock claw 31 is released. Thus, the release of the fixing of the movable-side front block 3 according to the slide operation is stably realized, and unintended release of the fixing is prevented from occurring.

In the present technology, the movable-side front block 3 is rotatably connected to the fixing-side front block 2 by the link mechanism block 5. Thus, the flip-up operation and the flip-down operation are stably realized.

In the present technology, the link mechanism block 5 is provided in the area of each of the fixing-side front block 2 and the movable-side front block 3 on the side of the face of the user.

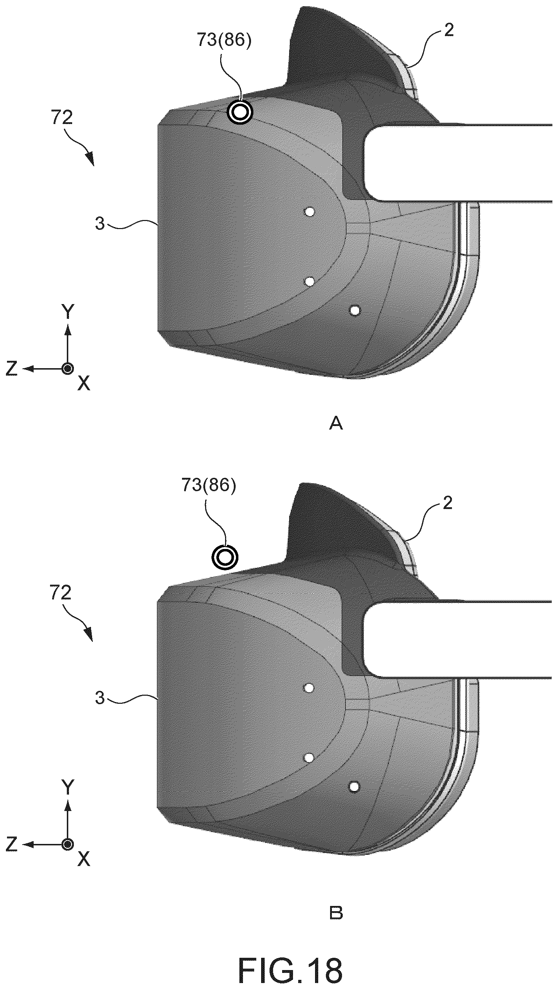

Figs. 18 are schematic diagrams showing a head-mounted display 72 according to a comparative example.

The head-mounted display 72 according to the comparative example includes a connection mechanism 73 which rotatably connects the fixing-side front block 2 and the movable-side front block 3.

In the example shown in Fig. 18A, the connection mechanism 73 is provided inside the head-mounted display 72. In this case, however, since the fixing-side front block 2 and the movable-side front block 3 are abutted on the upper side of the connection mechanism 73, the abutment portions inhibit the start of the flip-up. To avoid this problem, a method of providing a gap between the abutment portions is conceivable, but this impairs design of the head-mounted display 72.

Alternatively, a method of providing the connection mechanism 73 outside the head-mounted display 72 as shown in Fig. 18B is also conceivable, but this leads to a problem that the size of the head-mounted display 72 becomes large and the design is impaired.

In the present technology, the link mechanism block 5 is provided inside the head-mounted display 1. Since the upper link 48 and the lower link 49 have unequal lengths, the flip-up operation is started while the movable-side front block 3 moves to be pushed out toward the positive side of the Z axis (the left side in Figs. 12 to 15) as shown in Figs. 12 to 15. Accordingly, the abutment portions do not inhibit the start of the flip-up. Thus, it becomes possible to provide a mechanism for the connection without providing a gap between the abutment portions, and thus a compact head-mounted display 1 having high design is realized.

In the present technology, when the rotation angle of the movable-side front block 3 is smaller than the predetermined angle, the link spring 51 biases the movable-side front block 3 to rotate in the flip-down direction. In addition, when the rotation angle is larger than the predetermined angle, the movable-side front block 3 is biased to rotate in the flip-up direction.

For example, when the user flips up the movable-side front block 3 to a state close to the maximum rotation angle, even when the user releases the hand from the movable-side front block 3, the movable-side front block 3 is retained at the position of the maximum rotation angle. In other words, the user can, for example, check the peripheral view or perform a task while his/her hand is released from the movable-side front block 3 during flip-up.

Further, when the rotation angle is smaller than the predetermined angle, the movable-side front block 3 operates toward the flip-down state. In other words, the flip-down operation can be performed without applying a large force. In this manner, convenience of the head-mounted display 1 is improved.

In the present technology, the link spring 51 is configured such that the maximum value of the load in midst of the rotation operation becomes 4.8 N or more and 7.2 N or less, the maximum value of the load in the flip-down state becomes 1.6 N or more and 2.4 N or less, and the maximum value of the load in the flip-up state becomes 2.8 N or more and 4.2 N or less. Thus, it becomes possible to stably bias the movable-side front block 3.

In the present technology, the fixing-side front block 2 is attached to the forehead of the user via the upper pad 9. In addition, the movable-side front block 3 is attached to the cheeks of the user via the lower pads 29. Thus, a load on the forehead and cheeks of the user when wearing the head-mounted display 1 can be reduced, and thus a sense of fit can be enhanced.

In the present technology, the attachment portions 12 for attaching the belt 14 are provided in the fixing-side front block 2. Thus, it becomes possible to stably attach the belt 14.

In the present technology, the display 4 is retained by the movable-side front block 3. Thus, a situation where the display 4 unintentionally moves due to vibrations and the like is prevented from occurring.

### <Other embodiments>

The present technology is not limited to the embodiments described above, and various other embodiments can be realized.

### [Position of upper pad]

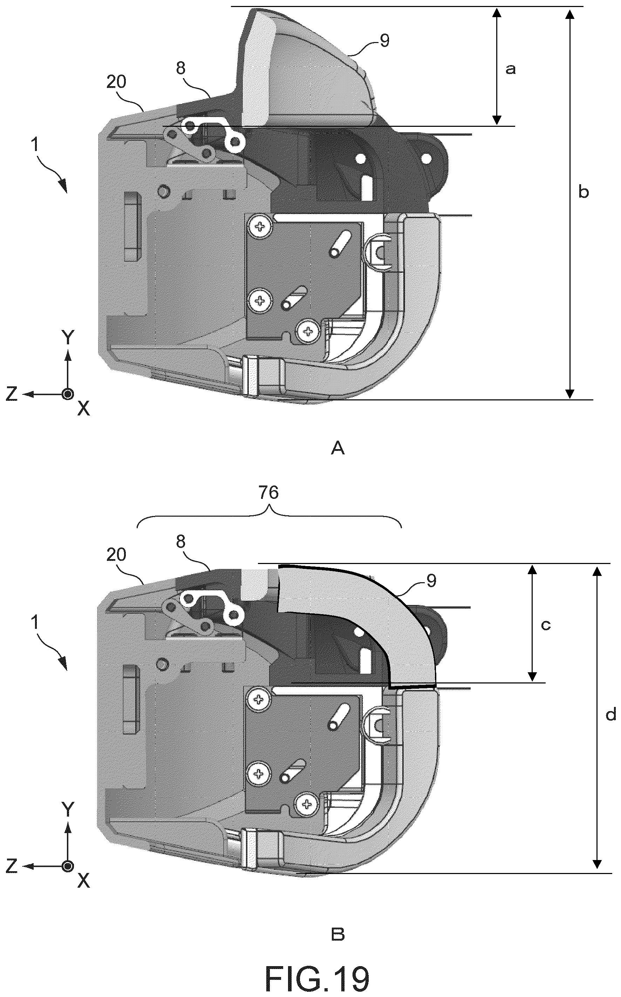

Figs. 19 are schematic diagrams each showing a setting position of the upper pad 9.

Fig. 19A shows the head-mounted display 1 having the protruded upper pad 9 similar to Figs. 1 and the like. Further, a longitudinal width a of the upper pad 9 and a longitudinal width b of the entire head-mounted display 1 are indicated by arrows. Fig. 19B shows the head-mounted display 1 in which the upper pad 9 does not protrude. Furthermore, a longitudinal width c of the upper pad 9 and a longitudinal width d of the entire head-mounted display 1 are indicated by arrows.

The head-mounted display 1 shown in Fig. 19B includes a planar upper surface 76 positioned on an upper side in the basic usage state. In the present embodiment, the upper surface 76 is, out of the upper surface of the upper housing 8 and the upper surface of the lower housing 20, a vicinity of a center when the head-mounted display 1 is seen from above.

It is noted that a case where the upper surface 76 is roughly planar is also included in the case where the upper surface 76 is planar. For example, although the upper surface 76 is more or less tilted in the example shown in Fig. 19B, this case can also be said that the upper surface 76 is planar. Of course, a case where the upper surface 76 is completely planar is included in the case where the upper surface 76 is planar.

In the example shown in Fig. 19B, the upper pad 9 is configured so as not to protrude from the upper surface 76. Specifically, a position of an upper end of the upper pad 9 and a position of an upper end of the upper surface 76 in the up-down direction are roughly at the same position. In other words, the upper pad 9 does not protrude upwardly with respect to the upper surface 76.

On the other hand, in the example shown in Fig. 19A, a portion of the upper housing 8 that is abutted against the upper pad 9 protrudes upwardly, so the head-mounted display 1 does not have a planar upper surface. Moreover, even when it is assumed that the head-mounted display 1 has a planar upper surface, the upper pad 9 protrudes from the upper surface.

The longitudinal width d of the entire head-mounted display 1 shown in Fig. 19B is smaller than the longitudinal width b of the entire head-mounted display 1 shown in Fig. 19A. Specifically, a protruded portion of the upper pad 9 is eliminated in Fig. 19B, and the longitudinal width d is reduced by that amount. Thus, the head-mounted display 1 can be downsized, and design is improved.

Further, in the example shown in Fig. 19B, the longitudinal width c of the upper pad 9 is set as appropriate so as not to lower the attachment stability of the head-mounted display 1 during flip-up. Specifically, the longitudinal width c is set to a value of 20 mm or more. There may be a case where the attachment stability is lowered more or less by adopting the configuration in which the upper pad 9 does not protrude, but by securing the longitudinal width c in this manner, it becomes possible to suppress lowering of the attachment stability.

### [Button/slide switch]

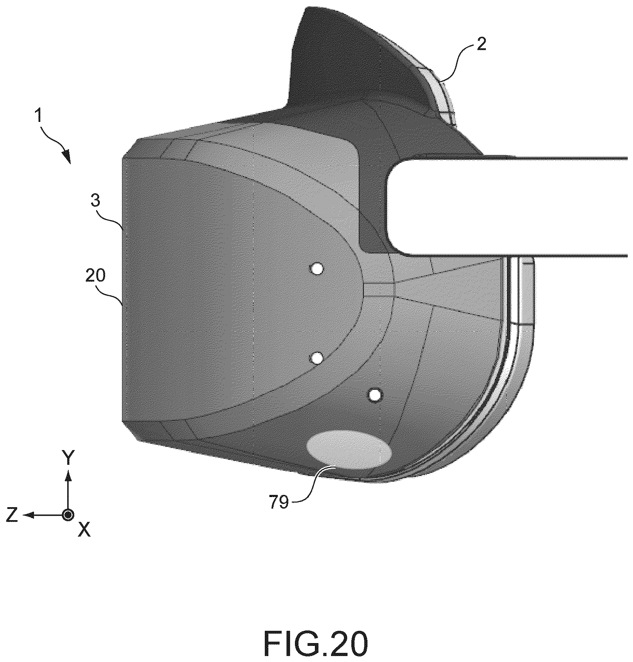

Fig. 20 is a schematic diagram showing the head-mounted display 1 including a button.

In the present embodiment, the head-mounted display 1 includes a button 79. The button 79 is provided on a front surface on a lower side of the lower housing 20.

The button 79 is an operation element for releasing the fixing of the movable-side front block 3 to the fixing-side front block 2. In the present embodiment, an operation of the button 79 is included in the predetermined operation. In other words, when the user presses the button 79, for example, the lock claw 31 operates to release the latch. Thus, the fixing of the movable-side front block 3 is released.

Thus, the user can perform the flip-up operation without performing the slide operation of the movable-side front block 3, for example. In other words, the divided structure (the lower pad block 18 and the lower housing 20) of the movable-side front block 3 does not need to be provided, and thus it becomes possible to realize downsizing, a reduction in weight, and cost down of the head-mounted display 1.

The button 79 corresponds to an embodiment of an operation element according to the present technology. Of course, a specific type of the operation element is not limited. For example, a slide switch may be provided as the operation element. In this case, the predetermined operation becomes an operation of causing the slide switch to slide. Besides this, a specific configuration including a type of the operation element, a position at which the operation element is provided, and the like is not limited.

### [Light-shielding cover]

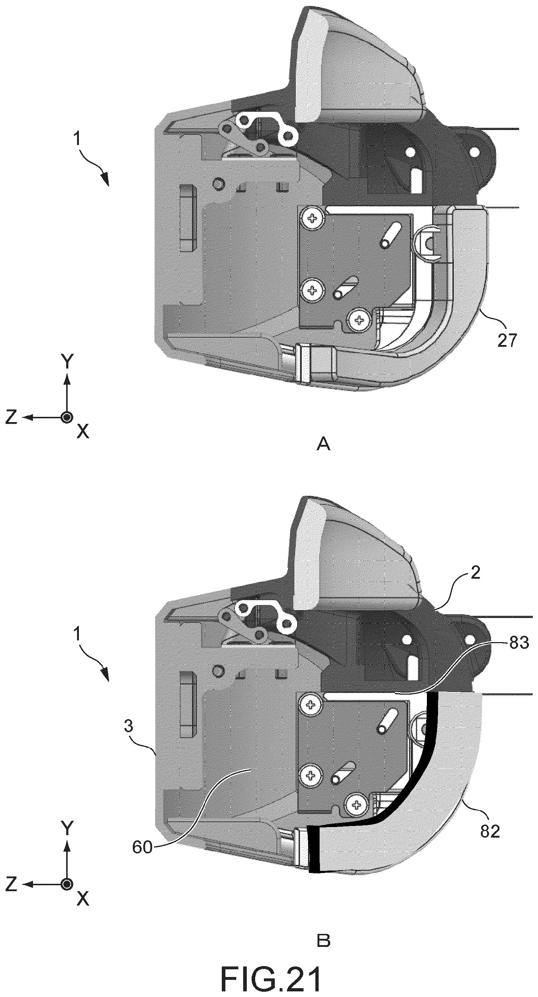

Figs. 21 are schematic diagrams each showing a configuration example of a light-shielding cover. Fig. 21A shows the head-mounted display 1 including the lower pad 29 similar to Figs. 1 and the like. Fig. 21B shows the head-mounted display 1 including a light-shielding cover 82.

In the present embodiment, the light-shielding cover 82 comes into contact with the cheeks of the user such that a load is not received from the cheeks of the user. Specifically, the light-shielding cover 82 is provided at a position similar to that of the lower pad 29 shown in Fig. 21A. When the head-mounted display 1 is worn, the upper pad 9 receives a load from the forehead of the user, but the light-shielding cover 82 does not receive a load from the cheeks of the user. It is noted that a state where the light-shielding cover 82 more or less receives a load from the cheeks of the user is also included in the state where the load is not received.

Light that travels from the lower side of the head-mounted display 1 is shielded by the light-shielding cover 82. Accordingly, in the head-mounted display 1 shown in Fig. 21B, similar to the head-mounted display 1 including the lower pads 29 shown in Fig. 21A, excess light from outside does not enter the internal space 60, and the immersiveness in viewing a video is maintained.

Moreover, in the present embodiment, the head-mounted display 1 includes a fixing structure 83 which removably fixes the movable-side front block 3 to the fixing-side front block 2. For example, the fixing structure 83 is provided at the abutment portions of the fixing-side front block 2 and the movable-side front block 3 (near the portion where the lock claws 31 are latched in the head-mounted display 1 shown in Fig. 21A). The fixing structure 83 is constituted of two structures including a click mountain formed in the fixing-side front block 2 and a groove catching shape formed in the movable-side front block 3, for example.

Thus, the movable-side front block 3 is removably fixed to the fixing-side front block 2. In other words, the fixing to the fixing-side front block 2 is easily released with a small force.

Since the light-shielding cover 82 is configured so as not to receive a load from the cheeks of the user, the movable-side front block 3 will not receive the load via the light-shielding cover 82. Accordingly, the mechanism for enduring the load, such as the lock claw 31, becomes unnecessary, and a simple fixing structure 83 for positioning only needs to be provided. Thus, the downsizing and reduction in weight of the head-mounted display 1 become possible.

For example, the light-shielding cover 82 is formed to have a thickness of about 1 mm, and a silicon material or the like is used as the material. Of course, a specific configuration of the light-shielding cover 82 including the material, shape, and the like is not limited. A specific configuration of the fixing structure 83 is also not limited. The light-shielding cover 82 corresponds to an embodiment of a light-shielding member according to the present technology.

### [Single-axis rotation shaft]

In the present embodiment, the head-mounted display 1 includes one shaft member 86 which rotatably connects the movable-side front block 3 to the fixing-side front block 2. The shaft member 86 is constituted of a single-axis rotation shaft, and as shown in Fig. 18A, for example, the shaft member 86 is set inside the fixing-side front block 2 and the movable-side front block 3 while a gap is provided between the abutment portions at the upper portions of the fixing-side front block 2 and the movable-side front block 3. Alternatively, as shown in Fig. 18B, the shaft member 86 is provided outside (above) the fixing-side front block 2 and the movable-side front block 3.

Thus, the structure of the head-mounted display 1 becomes simpler than that of the case where the link mechanism block 5 is provided, and production costs can thus be suppressed. A specific configuration, setting position, and the like of the shaft member 86 are not limited.

### [Torque hinge]

In the present embodiment, the link mechanism block 5 includes a torque hinge. Specifically, for example, the torque hinge is provided in at least one of four contact portions (bearing portions) between the upper link 48 and lower link 49 and the shafts 50. Alternatively, the torque hinge may be provided in all of the four bearing portions.

In this case, a force acts on the movable-side front block 3 from the torque hinge to fix the movable-side front block 3. In other words, when the user releases a hand from the movable-side front block 3 in midst of the flip-up operation, the movable-side front block 3 stops at the position at which the hand is released without being biased in the flip-up direction nor the flip-down direction.

Accordingly, the setting of the link springs 51 for biasing the movable-side front block 3 becomes unnecessary. Thus, the head-mounted display 1 can be downsized.

It is noted that when the shaft member 86 is provided, the shaft member 86 may include the torque hinge. Besides these, a specific configuration of the torque hinge is not limited. The torque hinge corresponds to an embodiment of a hinge mechanism according to the present technology.

### [Configuration of lower pad]

The lower pad 29 may be configured to come into contact with a chin or the like of the user. In addition, the lower pad 29 may be formed by a single member instead of being split to both sides. Besides these, a specific configuration of the lower pad 29 is not limited.

### [Comparison of features among structures]

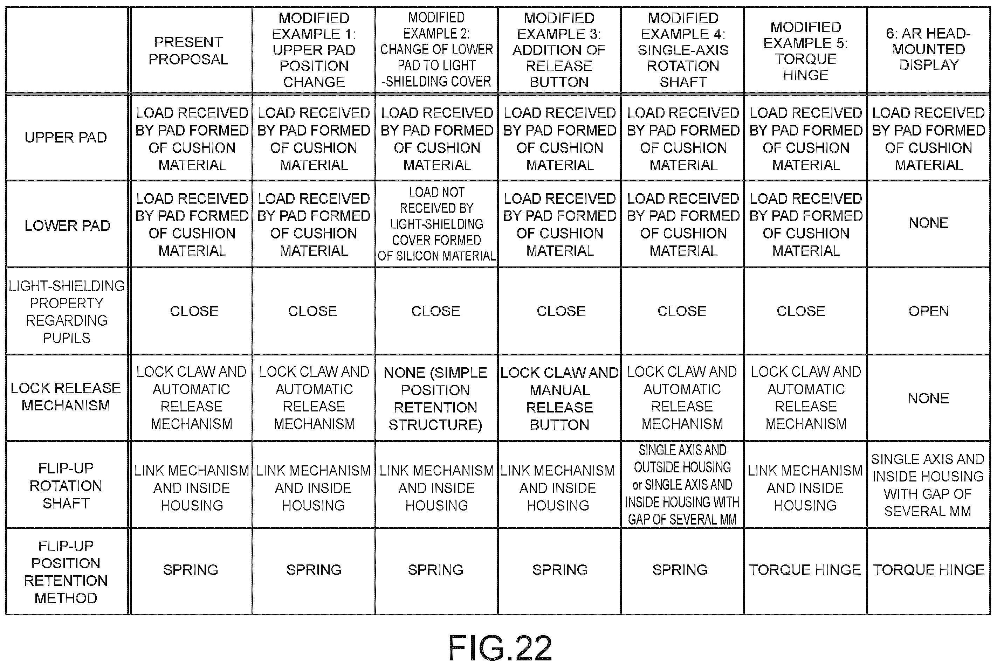

Fig. 22 is a table showing features in each structure of the head-mounted display 1.

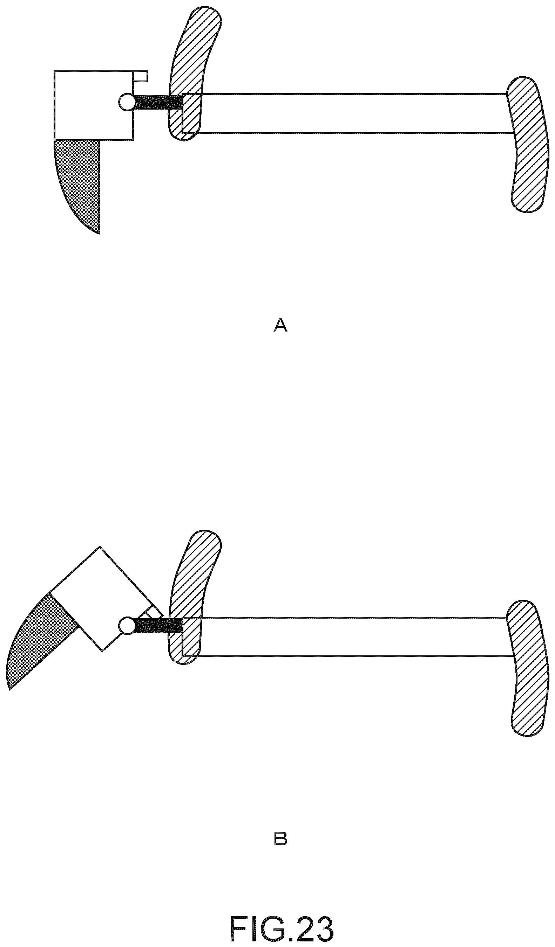

Figs. 23 are schematic diagrams showing a head-mounted display 89 according to a comparative example.

### The head-mounted display 89 shown in Figs. 23 includes a pad that comes into contact with the forehead of the user and a pad that comes into contact with the back of the head. In addition, a front block is connected at a lower portion of the pad that comes into contact with the forehead. In other words, similar to the head-mounted display 63 shown in Fig. 17A, the head-mounted display 89 is a head-mounted display including a ring-type attachment block. A gap for a flip-up operation is provided between the pad that comes into contact with the forehead and the front block.

Fig. 22 is a table that shows the features of the following head-mounted displays.

### Present proposal (Figs. 1 and the like)

Modified Example 1: change of position of upper pad (Figs. 19)
Modified Example 2: light-shielding cover (Figs. 21)
Modified Example 3: release button (Fig. 20)
Modified Example 4: single-axis rotation shaft
Modified Example 5: torque hinge
Head-mounted display according to comparative example (Figs. 23)

The head-mounted display, the fixing-side front block, the movable-side front block, the link mechanism block, the upper housing, the lower pad block, the lower housing, the lock claws, the claw pressing rib, and the like that have been described with reference to the respective figures are mere embodiments and can be arbitrarily modified without departing form the gist of the present technology. In other words, other arbitrary configurations and the like for executing the present technology may also be adopted.

In the present disclosure, the term "substantially" is used to help understand the descriptions, and there is no special meaning when using or not using the term "substantially". In other words, in the present disclosure, a concept defining a shape, a size, a positional relationship, a state, and the like such as "center", "middle", "uniform", "equal", "same", "orthogonal", "parallel", "symmetric", "extend", "axial direction", "circular cylinder shape", "cylindrical shape", "ring shape", "circular shape", "elliptical shape", "semi-elliptical shape", "rectangular shape", "rectangle", "triangular shape", "columnar shape", "plate shape", "band shape", "stick shape", "arc shape", and "claw shape" is a concept including "substantially at the center", "substantially in the middle", "substantially uniform", "substantially equal", "substantially the same", "substantially orthogonal", "substantially parallel", "substantially symmetric", "extend substantially", "substantially the axial direction", "substantially the circular cylinder shape", "substantially the cylindrical shape", "substantially the ring shape", "substantially the circular shape", "substantially the elliptical shape", "substantially the semi-elliptical shape", "substantially the rectangular shape", "substantially the rectangle", "substantially the triangular shape", "substantially the columnar shape", "substantially the plate shape", "substantially the band shape", "substantially the stick shape", "substantially the arc shape", "substantially the claw shape", and the like. For example, a state within a predetermined range (e.g., range within ±10%) that uses "completely at the center", "completely in the middle", "completely uniform", "completely equal", "completely the same", "completely orthogonal", "completely parallel", "completely symmetric", "extend completely", "completely the axial direction", "completely the circular cylinder shape", "completely the cylindrical shape", "completely the ring shape", "completely the circular shape", "completely the elliptical shape", "completely the semi-elliptical shape", "completely the rectangular shape", "completely the rectangle", "completely the triangular shape", "completely the columnar shape", "completely the plate shape", "completely the band shape", "completely the stick shape", "completely the arc shape", "completely the claw shape", and the like as a reference is also included. Accordingly, even when the term "substantially" is not added, what you might call a concept that may be expressed by adding "substantially" may be included. Conversely, a complete state is not necessarily excluded regarding the state expressed by adding "substantially".

In the present disclosure, expressions that use "than" as in "larger than A" and "smaller than A" are expressions that comprehensively include both of a concept including a case of being equal to A and a concept not including the case of being equal to A. For example, "larger than A" is not limited to a case that does not include equal to A and also includes "A or more". In addition, "smaller than A" is not limited to "less than A" and also includes "A or less". In executing the present technology, specific settings and the like only need to be adopted as appropriate from the concepts included in "larger than A" and "smaller than A" so that the effects described above are exerted.

Of the feature portions according to the present technology described above, at least two of the feature portions can be combined. In other words, the various feature portions described in the respective embodiments may be arbitrarily combined without distinction of the embodiments. Moreover, the various effects described above are mere examples and are not limited, and other effects may also be exerted.

It is noted that the present technology can also take the following configurations.
(1) A head-mounted display, including:
   a first member including a first pad which comes into contact with a first part of a face of a user;
   a second member including a second pad which comes into contact with a second part of the face of the user different from the first part; and
   a fixing member which is capable of fixing the second member to the first member and is configured such that the fixing of the second member to the first member is released when a predetermined operation is made by the user.
(2) The head-mounted display according to (1), in which
   the fixing member includes a claw member which is connected to the second member, is latched to the first member, and is configured such that the latch to the first member is released when the predetermined operation is made.
(3) The head-mounted display according to (1) or (2), in which
   the second member includes a fixing-side member which is fixed to the first member by the fixing member and a movement-side member which is movably connected to the fixing-side member, and
   the predetermined operation includes an operation of moving the movement-side member with respect to the fixing-side member.
(4) The head-mounted display according to (3), in which
   the movement-side member is movably connected to the fixing-side member via a spring.
(5) The head-mounted display according to (3) or (4), in which
   the fixing member includes a claw member which is movably connected to the fixing-side member, is latched to the first member, and is configured such that the latch to the first member is released when the predetermined operation is made, and
   the movement-side member includes a pressing member which presses the claw member such that the latch of the claw member with respect to the first member is released in accordance with the operation of moving the movement-side member with respect to the fixing-side member.
(6) The head-mounted display according to (5), in which
   the claw member is rotatably connected to the fixing-side member, and
   the pressing member presses the claw member such that the claw member rotates in a direction in which the latch of the claw member with respect to the first member is released in accordance with the operation of moving the movement-side member with respect to the fixing-side member.
(7) The head-mounted display according to any one of (1) to (6), in which
   the first member is attached to a forehead of the user which is the first part via the first pad, and
   the second member is attached to a cheek of the user which is the second part via the second pad.
(8) The head-mounted display according to any one of (1) to (7), further including:
   a link mechanism which rotatably connects the second member to the first member, in which
   the link mechanism mutually connects the first member and the second member such that a rotation operation can be made, the rotation operation being an operation in which the second member whose fixing to the first member has been released rotates in a flip-up direction in which a rotation angle of the second member increases from a basic usage state of the head-mounted display.
(9) The head-mounted display according to (8), in which
   the link mechanism is configured in an area of each of the first member and the second member on a side of the face of the user in the basic usage state.
(10) The head-mounted display according to (8) or (9), in which
   the link mechanism includes a spring which biases the second member in accordance with the rotation operation.
(11) The head-mounted display according to (10), in which
   the spring included in the link mechanism biases, when the rotation angle of the second member is smaller than a predetermined angle, the second member to rotate in a flip-down direction in which the rotation angle of the second member becomes smaller, and biases, when the rotation angle of the second member becomes larger than the predetermined angle, the second member to rotate in the flip-up direction.
(12) The head-mounted display according to (10) or (11), in which
   a maximum value of a load of the spring in midst of the rotation operation is 4.8 N or more and 7.2 N or less.
(13) The head-mounted display according to any one of (10) to (12), in which
   the spring biases the second member with respect to the first member in a flip-down state where the second member is fixed to the first member, and
   a maximum value of a load of the spring in the flip-down state is 1.6 N or more and 2.4 N or less.
(14) The head-mounted display according to (8) or (9), in which
   the link mechanism includes a hinge mechanism.
(15) The head-mounted display according to any one of (1) to (7), further including:
   one shaft member which rotatably connects the second member to the first member, in which
   the one shaft member mutually connects the first member and the second member such that a rotation operation can be made, the rotation operation being an operation in which the second member whose fixing to the first member has been released rotates in a flip-up direction in which a rotation angle of the second member increases from a basic usage state of the head-mounted display.
(16) The head-mounted display according to any one of (1) to (15), further including:
   a planar upper surface which is positioned on an upper side in a basic usage state of the head-mounted display, in which
   the first pad is configured so as not to protrude from the upper surface.
(17) The head-mounted display according to (1) or (2) or any one of (7) to (16), further including:
   an operation element for releasing the fixing of the second member to the first member, in which
   the predetermined operation includes an operation of the operation element.
(18) The head-mounted display according to any one of (1) to (17), in which
   the first member includes an attachment portion for attaching a belt to be worn on a head of the user.
(19) The head-mounted display according to any one of (1) to (18), further including:
   a display unit which displays an image, in which the second member retains the display unit.
(20) A head-mounted display, including:
   a first member including a first pad which comes into contact with a first part of a face of a user;
   a second member including a light-shielding member which comes into contact with a second part of the face of the user different from the first part such that a load is not received from the second part; and
   a fixing structure which removably fixes the second member to the first member.
(21) The head-mounted display according to any one of (10) to (13), in which
   the spring biases the second member in a direction in which the second member moves away from the first member in a flip-up state where the second member is farthest from the first member, and
   the maximum value of the load of the spring in the flip-up state is 2.8 N or more and 4.2 N or less. Reference Signs List

- 1: head-mounted display
- 2: fixing-side front block
- 3: movable-side front block
- 4: display
- 5: link mechanism block
- 9: upper pad
- 10: attachment block
- 12: attachment portion
- 14: belt
- 18: lower pad block
- 20: lower housing
- 21: optical block
- 24: slide spring
- 29: lower pad
- 31: lock claw
- 38: claw pressing rib
- 51: link spring
- 60: internal space
- 79: button
- 82: light-shielding cover
- 83: fixing structure
- 86: shaft member

## Claims

1. A head-mounted display, comprising:
a first member including a first pad which comes into contact with a first part of a face of a user;
a second member including a second pad which comes into contact with a second part of the face of the user different from the first part; and
a fixing member which is capable of fixing the second member to the first member and is configured such that the fixing of the second member to the first member is released when a predetermined operation is made by the user.

2. The head-mounted display according to claim 1, wherein
the fixing member includes a claw member which is connected to the second member, is latched to the first member, and is configured such that the latch to the first member is released when the predetermined operation is made.

3. The head-mounted display according to claim 1, wherein
the second member includes a fixing-side member which is fixed to the first member by the fixing member and a movement-side member which is movably connected to the fixing-side member, and
the predetermined operation includes an operation of moving the movement-side member with respect to the fixing-side member.

4. The head-mounted display according to claim 3, wherein
the movement-side member is movably connected to the fixing-side member via a spring.

5. The head-mounted display according to claim 3, wherein
the fixing member includes a claw member which is movably connected to the fixing-side member, is latched to the first member, and is configured such that the latch to the first member is released when the predetermined operation is made, and
the movement-side member includes a pressing member which presses the claw member such that the latch of the claw member with respect to the first member is released in accordance with the operation of moving the movement-side member with respect to the fixing-side member.

6. The head-mounted display according to claim 5, wherein
the claw member is rotatably connected to the fixing-side member, and
the pressing member presses the claw member such that the claw member rotates in a direction in which the latch of the claw member with respect to the first member is released in accordance with the operation of moving the movement-side member with respect to the fixing-side member.

7. The head-mounted display according to claim 1, wherein
the first member is attached to a forehead of the user which is the first part via the first pad, and
the second member is attached to a cheek of the user which is the second part via the second pad.

8. The head-mounted display according to claim 1, further comprising:
a link mechanism which rotatably connects the second member to the first member, wherein
the link mechanism mutually connects the first member and the second member such that a rotation operation can be made, the rotation operation being an operation in which the second member whose fixing to the first member has been released rotates in a flip-up direction in which a rotation angle of the second member increases from a basic usage state of the head-mounted display.

9. The head-mounted display according to claim 8, wherein
the link mechanism is configured in an area of each of the first member and the second member on a side of the face of the user in the basic usage state.

10. The head-mounted display according to claim 8, wherein
the link mechanism includes a spring which biases the second member in accordance with the rotation operation.

11. The head-mounted display according to claim 10, wherein
the spring included in the link mechanism biases, when the rotation angle of the second member is smaller than a predetermined angle, the second member to rotate in a flip-down direction in which the rotation angle of the second member becomes smaller, and biases, when the rotation angle of the second member becomes larger than the predetermined angle, the second member to rotate in the flip-up direction.

12. The head-mounted display according to claim 10, wherein
a maximum value of a load of the spring in midst of the rotation operation is 4.8 N or more and 7.2 N or less.

13. The head-mounted display according to claim 10, wherein
the spring biases the second member with respect to the first member in a flip-down state where the second member is fixed to the first member, and
a maximum value of a load of the spring in the flip-down state is 1.6 N or more and 2.4 N or less.

14. The head-mounted display according to claim 8, wherein
the link mechanism includes a hinge mechanism.

15. The head-mounted display according to claim 1, further comprising:
one shaft member which rotatably connects the second member to the first member, wherein
the one shaft member mutually connects the first member and the second member such that a rotation operation can be made, the rotation operation being an operation in which the second member whose fixing to the first member has been released rotates in a flip-up direction in which a rotation angle of the second member increases from a basic usage state of the head-mounted display.

16. The head-mounted display according to claim 1, further comprising:
a planar upper surface which is positioned on an upper side in a basic usage state of the head-mounted display, wherein
the first pad is configured so as not to protrude from the upper surface.

17. The head-mounted display according to claim 1, further comprising:
an operation element for releasing the fixing of the second member to the first member, wherein
the predetermined operation includes an operation of the operation element.

18. The head-mounted display according to claim 1, wherein
the first member includes an attachment portion for attaching a belt to be worn on a head of the user.

19. The head-mounted display according to claim 1, further comprising:
a display unit which displays an image, wherein
the second member retains the display unit.

20. A head-mounted display, comprising:
a first member including a first pad which comes into contact with a first part of a face of a user;
a second member including a light-shielding member which comes into contact with a second part of the face of the user different from the first part such that a load is not received from the second part; and
a fixing structure which removably fixes the second member to the first member.
